# EUROPEAN PATENT SPECIFICATION

(11) **EP 3 604 617 B1**
(45) Date of publication and mention of the grant of the patent: **22.05.2024**
(21) Application number: 18771391.2
(22) Date of filing: 23.03.2018
(51) Int. Cl.: C25B 1/04, C25B 15/02, C25B 15/08, C25B 9/19, C25B 9/73, C25B 9/77

(54) **ALKALINE WATER ELECTROLYSIS SYSTEM AND METHOD FOR PRODUCING HYDROGEN**
ALKALISCHES WASSERELEKTROLYSESYSTEM UND VERFAHREN ZUR HERSTELLUNG VON WASSERSTOFF
SYSTÈME D'ÉLECTROLYSE D'EAU ALCALINE, ET PROCÉDÉ DE PRODUCTION D'HYDROGÈNE

(30) Priority: 23.03.2017 JP 2017057829; 23.03.2017 JP 2017057732; 31.03.2017 JP 2017072965
(43) Date of publication of application: 05.02.2020
(73) Proprietor: Asahi Kasei Kabushiki Kaisha, Tokyo 100-0006 (JP)
(72) Inventor: KOGA Takehiro, Tokyo 100-0006 (JP); UCHINO Yousuke, Tokyo 100-0006 (JP); KOMURA Ryo, Tokyo 100-0006 (JP); HASEGAWA Shinji, Tokyo 100-0006 (JP)
(74) Representative: dompatent von Kreisler Selting Werner - Partnerschaft von Patent- und Rechtsanwälten mbB
(86) International application number: PCT/JP2018/011900
(87) International publication number: WO 2018/174281

(56) References cited:
- EP-A2- 3 591 095
- WO-A1-2020/105369
- CN-A- 1 258 762
- CN-Y- 2 450 229
- JP-A- S5 950 186
- JP-A- H08 260 178
- JP-A- 2002 038 290
- JP-A- 2003 071 448
- JP-A- 2003 105 577
- JP-A- 2003 342 773
- JP-A- 2010 280 975
- JP-A- 2011 140 674
- JP-A- 2012 111 981
- JP-A- 2013 249 508
- JP-A- 2014 504 680
- JP-A- 2015 117 139
- JP-A- 2016 094 646
- JP-A- 2016 204 698
- KR-A- 20030 043 917
- US-A- 4 323 442
- US-A1- 2011 198 235
- US-A1- 2013 228 456
- US-A1- 2014 202 875

## Description

### TECHNICAL FIELD

The present disclosure relates to an alkaline water electrolysis system and a hydrogen production method.

### BACKGROUND

In recent years, techniques utilizing renewable energy, such as wind power generation and photovoltaic power generation, have attracted attention in order to address the issues including global warming due to greenhouse gases such as carbon dioxide, decrease in fossil fuel reserves, or the like.

The nature of renewable energy is that it is subject to very large fluctuation as its output depends on climatic conditions. It is thus not always possible to transport electric power obtained by electricity generation by renewable energy to the general electric power system, and there is concern about social influences such as imbalance of electricity supply and demand, destabilization of electric power system, or the like.

Therefore, research is being conducted to convert the electric power generated from renewable energy into a form suitable for storage and transportation for utilization. Specifically, study has been made on how to generate storable and transportable hydrogen by electrolysis of water using electric power generated from renewable energy, and to use hydrogen as an energy source or material.

Hydrogen is widely used industrially in the fields of, for example, petroleum refining, chemical synthesis, and metal refining, and in recent years, it can be used in many scenes such as hydrogen stations for fuel cell vehicles (FCVs), smart communities, and hydrogen power plants. Accordingly, there is high expectation for the development of technology to obtain, in particular, hydrogen from renewable energy.

Methods for electrolysis of water include solid polymer electrolyte water electrolysis, high-temperature steam electrolysis, and alkaline water electrolysis. Of these, alkaline water electrolysis is regarded as one of the most promising because of its industrialization over decades, large-scale availability, and inexpensiveness as compared to other water electrolysis devices.

However, for adaptation of alkaline water electrolysis as a means for storing and transporting energy, it is necessary to make it possible to conduct water electrolysis efficiently and stably using electric power with large fluctuation in output as described above, and it is required to address various issues associated with electrolytic cells and devices for alkaline water electrolysis.

In order to address the issue of improving the electric power consumption rate for hydrogen production by suppressing the bath voltage in alkaline water electrolysis, it is known to be effective to use a structure in which the gap between the membrane and the electrodes is substantially eliminated, which is called a zero-gap structure, as the structure of the electrolytic cell (see P5553605b (PTL 1) and WO2015098058A (PTL 2)). With the zero-gap structure, by rapidly escaping the generated gas through the pores of an electrode to the side opposite to the membrane side of the electrode, it is possible to reduce the distance between the electrode while minimizing gas accumulation near the electrode, thereby keeping bath voltage low. The zero-gap structure is very effective in suppressing bath voltage and is adopted in various electrolysis devices.
US 2014/202875 discloses an alkaline water electrolysis system comprising a hydrogen gas line and an oxygen gas line, each connected to an electrolyzer, wherein both the hydrogen gas line and the oxygen gas line is provided with a gas concentration meter a pressure gauge and a pressure control valve. The gas concentration meter is situated upstream side of the pressure control valve. The opening of the pressure control valves is automatically by the control loop. The power supply maybe fluctuating. The tanks are storing tanks for the electrolyte and gathered O₂ and H₂ together. The pressure data i.e. the pressure difference is used to stabilize and equalize the pressures in the cathode and anode departments.
EP 3 591 095 discloses an alkaline water electrolysis system comprising a hydrogen gas line and an oxygen gas line, each connected to an electrolyzer, wherein at least one of the hydrogen gas line and the oxygen gas line is provided with a gas concentration meter a pressure gauge and a pressure control valve. The gas concentration meter is situated downstream side of the pressure control valve. A variable i.e. fluctuating power source is used. There are also separation tanks for H₂ and O₂.
US 4 323 442 discloses an alkaline water electrolysis system comprising a hydrogen gas line and an oxygen gas line, each connected to an electrolyzer, wherein each of the hydrogen gas line and the oxygen gas line is provided with a gas concentration meter, a pressure gauge and a pressure control valve. The gas concentration meter is situated upstream side of the pressure control valve. The opening of the pressure control valves is automatic by the regulator. The pressure data i.e. the pressure difference is used to stabilize and equalize the pressures in the cathode and anode departments.
KR 2003 0043917 discloses an alkaline water electrolysis system comprising a hydrogen gas line and an oxygen gas line, each connected to an electrolyzer, wherein the oxygen gas line is provided with a gas concentration meter, a pressure gauge, and a pressure control valve. The gas concentration meter is situated downstream side of the pressure control valve and parallel to the gas concentration meter. The flow rate maybe controlled by valve in the same line. The opening of the pressure control valves is automatic by the relief mechanism. The pressure data i.e. the pressure difference is used to stabilize and equalize the pressures in the cathode and anode departments.
US 2013/2284.56 discloses an alkaline water electrolysis system comprising a hydrogen gas line and an oxygen gas line, each connected to an electrolyzer, wherein at least the oxygen outlet gas line is provided with a gas concentrationmeter, a pressure gauge and a pressure control valve. The gas concentration meter is situated upstream side of the pressure control valve. The opening of the pressure control valves is automatic by the relief mechanism. The pressure of both H₂ and O₂, are measured and the pressure difference is controlled. The oxygen from the anode and the hydrogen from the cathode may be recycled back to the cell from their collection devices.
US 2011/198235 discloses a water electrolysis system comprising a hydrogen gas line and an oxygen gas line, each connected to an electrolyzer, wherein at least the oxygen outlet gas line is provided with a gas concentration meter, a pressure gauge and a pressure control valve. The opening of the pressure control valves is automatic by the relief mechanism. The pressure of both H₂ and O₂ arc measured and the pressure difference is controlled. The oxygen from the anode maybe recycled back to the cell from their collection devices. It also teaches the water flow pump is stopped but the exhaust is opened.
JP S 59 50186 discloses storing hydrogen and controlling using current density but this triggers to enter more oxygen and is not related to electrolyte.
US 4 323 442 discloses the mixing of electrolytes, since the compensation circuitry is responsible for introducing some anolyte to the catholyte.
CN 2450229 discloses a device that uses solar energy and (or) wind energy to generate hydrogen, including a solar cell and (or) wind generator, water-electrolysis tube, water storage tube, the water storage tube has a water level sensor and a water quality filter, and the water quality filter enters the water. A solenoid valve is terminated, which is characterized in that the bottoms of the two electrolysis cylinders are connected by an insulating tube and then connected to the outlet pipe at the bottom of the water storage cylinder. After the three pipes are connected, a drainage pipe is connected. There is a manual valve on the drainage pipe. There is a solenoid valve on the water pipe, a water-level sensor is connected to the upper end of the electrolysis cylinder A, and a gas-water separator condenser is sealed to the upper end of the electrolysis cylinder B. The outlet of the condenser is connected to the compressor through a pipeline, and an oxygen sensor and compressor are connected to the pipeline. The outlet end of the one-way valve is connected to a one-way valve, the other end of the one-way valve is connected to the steel cylinder through a connecting pipe, and a pressure sensor is connected to the connecting pipe. There is a residual liquid drain pipe inserted into the bottom of the steel bottle, and the residual liquid drain pipe is outside the steel bottle part of it is connected to a valve, and the other end of the valve is connected to the gas outlet pipe of the steel cylinder through a connecting pipe. The gas outlet pipe is sequentially connected with a manual valve, a pressure reducing valve and a solenoid valve. The above-mentioned equipment is placed in a shell, and a hydrogen sensor is installed in the shell. The water inlet pipe of the water storage cylinder, the drain pipe of the electrolysis cylinder and the hydrogen pipe are led out from the shell.
CN 1258762 discloses a water-electrolyzing hydrogen generator having one liquid passage comprising water supplying pump, non-return valve, alkali cylinder, circular pump, flow rate switch, filter and electrolyzer; one hydrogen passage structure comprising hydrogen condenser, operation pressure difference regulator, closing pressure difference regulator, counter-balance valve, relief valve hydrogen pressure meter, hydrogen pressure sensor, oxygen-in-hydrogen detector, and hydrogen blowing valve; and one oxygen passage structure comprising oxygen condenser, operation pressure different regulator, closing pressure difference regulator, oxygen pressure meter, oxygen pressure sensor, hydrogen-in-oxygen test instrument and oxygen output valve. Its hydrogen product has a purity of 99.99 % and a water-content of less than 1.7 g/m³.

### CITATION LIST

### Patent Literature

PTL 1: JP5553605B
PTL 2: WO2015098058A

### SUMMARY

### (Technical Problem)

However, in the conventional alkaline water electrolysis system, in general, water electrolysis is conducted by adjusting the operating pressures of an anode compartment and a cathode compartment with a pressure regulating valve and measuring concentrations of oxygen gas and hydrogen gas by using a concentration meter for oxygen gas and hydrogen gas.

In order to measure concentration of oxygen gas and hydrogen gas, a slight change in volume is caused in the system by supply of gas to an oxygen and hydrogen gas concentration meter. Conventionally, when operating at a constant operating current density, a slight change in volume may cause no problem with pressure adjustment. However, when using a fluctuating power supply such as renewable energy, even a slight change in volume may cause a problem with pressure control. In particular, when electrolysis is conducted at a low current density, a decrease in operating pressure is caused by a change in volume in the system, which causes imbalance of differential pressure between the anode compartment side and the cathode compartment side and results in breakage of a membrane and a decrease in purity of gas due to gas permeation through a membrane. Thus a stable operation is difficult to be achieved.

It is therefore a first object of the present disclosure to provide an alkaline water electrolysis system capable of stably maintaining a pressure state on an anode side and on a cathode side.

The conventional alkaline water electrolysis system and the alkaline water electrolysis method also have a problem of degradation of gas purity at low current density or increase in temperature in an electrolysis system and degradation of a membrane caused thereby at high current density when operating under a fluctuating power supply such as photovoltaic power and wind power.

It is therefore a second object of the present disclosure to provide an alkaline water electrolysis system capable of obtaining a high gas purity at low current density and capable of suppressing degradation of a membrane by suppressing a temperature increase in the electrolysis system at high current density, and a method thereof.

Furthermore, in the conventional alkaline water electrolysis system, a reverse current flows to an anode and a cathode when electrolysis is stopped under a fluctuating power supply such as photovoltaic power and wind power, which may cause deterioration of an anode and a cathode.

It is therefore a third object of the present disclosure to provide an alkaline water electrolysis system capable of suppressing deterioration of an anode and a cathode under a fluctuating power supply.

### (Solution to Problem)

The present invention is directed to the subject-matter reflected in the appendant set of claims 1-13. oxygen gas line, each connected to an electrolyzer, wherein at least one of the

According to a first embodiment of the present disclosure, an alkaline water electrolysis system capable of stably maintaining a pressure state of an anode compartment side and a cathode compartment side can be provided.

According to a second embodiment of the present disclosure, an alkaline water electrolysis system capable of obtaining a high gas purity even at a low current density and capable of suppressing temperature rise in an electrolysis system even at a high current density and suppresing degradation of a membrane, and a method thereof can be provided.

According to a third embodiment of the present disclosure, under a fluctuating power supply such as photovoltaic power and wind power, degradation of anode and cathode that may occur when electrolysis is stopped can be suppressed.

### BRIEF DESCRIPTION OF THE DRAWINGS

In the accompanying drawings:
FIG. 1 is a diagram schematically illustrating an example of an alkaline water electrolysis system according to the present embodiment;
FIG. 2 is a diagram schematically illustrating a part of an example of the alkaline water electrolysis system according to the present embodiment;
FIG. 3 is a diagram schematically illustrating a part of another example of the alkaline water electrolysis system according to the present embodiment;
FIG. 4 is a diagram schematically illustrating a part of yet another example of the alkaline water electrolysis system according to the present embodiment;
FIG. 5 is a side view entirely illustrating an example of an electrolyzer of the alkaline water electrolysis system according to the present embodiment;
FIG. 6 is a perspective view illustrating an electrolysis compartment, headers and conduits of an example of an internal header type alkaline water electrolysis system according to the present embodiment;
FIG. 7 is a perspective view illustrating an electrolysis compartment, headers and conduits of an example of an external header type alkaline water electrolysis system according to the present embodiment;
FIG. 8 is a plan view illustrating an example of an electrolyzer of the internal header type alkaline water electrolysis system according to the present embodiment;
FIG. 9 is a plan view illustrating an example of an electrolyzer of the external header type alkaline water electrolysis system according to the present embodiment;
FIG. 10 is a diagram schematically illustrating the alkaline water electrolysis system according to the present embodiment; and
FIG. 11 is a diagram schematically illustrating the alkaline water electrolysis system according to the present embodiment.

### DETAILED DESCRIPTION

The following provides a detailed description of an embodiment of the present disclosure (hereinafter referred to as "the present embodiment").

The following provides a description of a first embodiment to achieve the first object of the present disclosure.

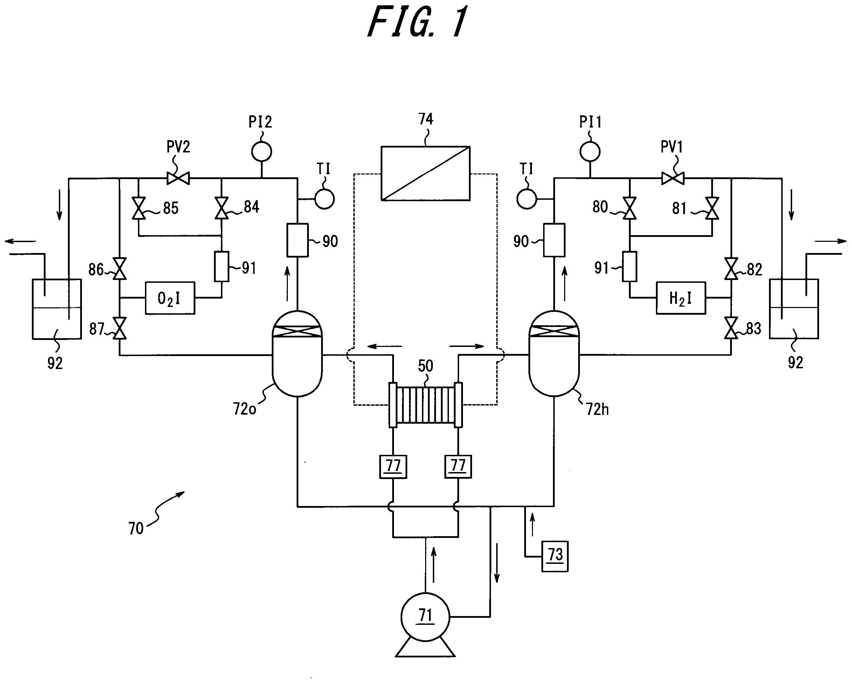

FIG. 1 is a diagram schematically illustrating an alkaline water electrolysis system according to the present embodiment.

### (Alkaline water electrolysis system)

An alkaline water electrolysis system 70 according to the present embodiment has a hydrogen gas line and an oxygen gas line, each connected to an electrolyzer 50.

In the alkaline water electrolysis system 70 according to the present embodiment, at least one of the hydrogen gas line and the oxygen gas line is provided with a gas concentration meter, a pressure gauge and a pressure control valve.

The alkaline water electrolysis system 70 according to the present embodiment further has a mechanism that automatically adjusts the opening of the pressure control valve.

Furthermore, in the alkaline water electrolysis system 70 according to the present embodiment, the gas concentration meter is arranged in parallel with the pressure control valve, and a gas concentration meter line is provided with a mechanism capable of controlling the pressure and/or the flow rate.

In the alkaline water electrolysis system 70 according to the present embodiment, the gas concentration meter is arranged on the upstream side of the pressure control valve.

In the alkaline water electrolysis system 70 according to the present embodiment, the gas concentration meter is arranged on the downstream side of the pressure control valve.

The alkaline water electrolysis system 70 according to the present embodiment has, as illustrated in FIG. 1, an electrolyzer 50, a feed pump 71 that circulates the electrolyte, gas-liquid separation tanks 72 (a hydrogen separation tank 72h, an oxygen separation tank 72o) that separate the electrolyte from hydrogen and/or oxygen, and a water replenisher 73 that replenishes water consumed by the electrolysis.

According to the alkaline water electrolysis system 70 of the present embodiment, pressure state on the anode compartment side and on the cathode compartment side can be stabilized. More specifically, according to the alkaline water electrolysis system 70 of the present embodiment, in the water electrolysis under an environment of fluctuating power supply such as photovoltaic power and wind power, pressure drop when electrolysis is stopped is suppressed, and a decrease in gas purity due to breakage of a membrane and gas permeation through a membrane caused by an imbalance of differential pressure between the anode compartment side and the cathode compartment side can be suppressed.

First, the components of the alkaline water electrolysis system 70 according to the present embodiment will be described.

### ((Electrolyzer))

The electrolyzer 50 for alkaline water electrolysis system 70 according to the present embodiment is not particularly limited, and may be a monopolar type or a bipolar type. A bipolar electrolyzer is preferable from an industrial viewpoint.

The bipolar type is one of methods of connecting a large number of cells to a power supply, in which, a plurality of bipolar elements 60 having an anode 2a as one surface thereof and a cathode 2c as one surface thereof are arranged in the same orientation and connected in series, and then only both ends thereof are connected to a power supply.

A bipolar electrolyzer 50 has a feature of enabling a small power supply current and can be used to produce a large quantity of compound, specific substance, or the like through electrolysis in a short time. Since power supply equipment having fixed current and high voltage is less expensive and more compact when power supply equipment having the same power is compared, the bipolar type is more preferable than the monopolar type from an industrial viewpoint.

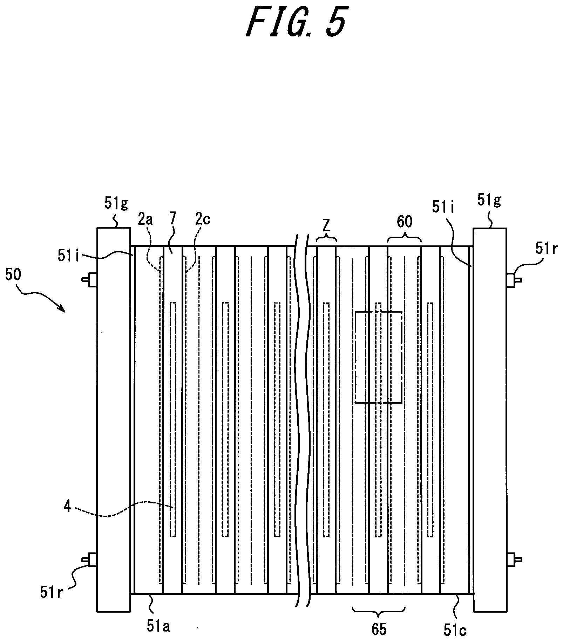

FIG. 5 is a side view entirely illustrating an example of an electrolyzer of the alkaline water electrolysis system according to the present embodiment.

The bipolar electrolyzer 50 for alkaline water electrolysis system 70 according to the present embodiment is a bipolar electrolyzer, as illustrated in FIG. 5, in which a plurality of bipolar elements 60, each including an anode 2a, a cathode 2c, a partition wall 1 separating the anode 2a and the cathode 2c from each other and an outer frame 3 bordering the partition wall 1, are stacked with the membrane 4 interposed therebetween.

### ((Bipolar element))

The bipolar element 60 used for the bipolar electrolyzer 50 for alkaline water electrolysis system 70 according to an example includes the partition wall 1 separating the anode 2a and the cathode 2c from each other and the outer frame 3 bordering the partition wall 1, as illustrated in FIG. 5. More specifically, the partition wall 1 is conductive and the outer frame 3 runs along the periphery of the partition wall 1 such as to border the partition wall 1.

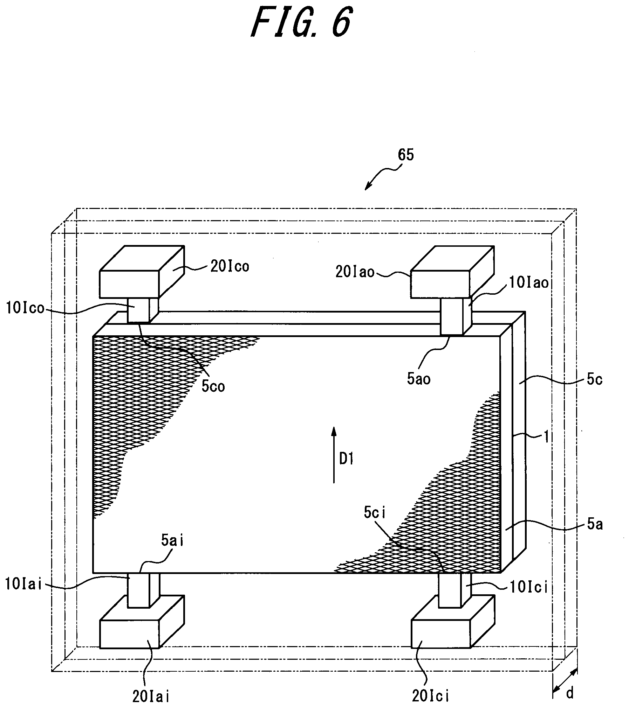

Note that, in the present embodiment, the bipolar element 60 may be typically used such that a given direction D1 along the partition wall 1 is a vertical direction. More specifically, as illustrated in FIGS. 6 to 9, when the partition wall 1 is rectangular in a plan view, the bipolar element 60 may be used such that a given direction D1 along the partition wall 1 is the same as the direction of one of two sets of sides facing to each other (see FIGS. 6 to 9). Herein the vertical direction may also be referred to as the electrolyte passing direction.

In the present embodiment, as illustrated in FIG. 5, the bipolar electrolyzer 50 is formed by stacking a required number of bipolar elements 60.

In the example of the bipolar electrolyzer 50 illustrated in FIG. 5, a fast head 51g, an insulating plate 51i and an anode terminal element 51a are arranged in order from one end, and in addition, an anode side gasket part 7, a membrane 4, a cathode side gasket part 7 and a bipolar element 60 are arranged side by side in this order. In this case, each bipolar element 60 is arranged such that the corresponding cathode 2c faces toward the anode terminal element 51a side. Components from the anode side gasket part 7 to the bipolar element 60 are repeatedly arranged as many times as required for the desired production quantity. After the required number of components from the anode side gasket part 7 to the bipolar element 60 are repeatedly arranged, an anode side gasket part 7, a membrane 4 and a cathode side gasket part 7 are arranged side by side again, and finally a cathode terminal element 51c, an insulating plate 51i and a loose head 51g are arranged in this order. All of these components of the bipolar electrolyzer 50 are tightened together with a tie rod 51r (see FIG. 5) or a tightening mechanism of hydraulic cylinder and are unified, and thus the bipolar electrolyzer 50 is formed.

The arrangement of the bipolar electrolyzer 50 can be selected from either the anode 2a side or the cathode 2c side, and is not limited to the above order.

As illustrated in FIG. 5, in the bipolar electrolyzer 50, the bipolar elements 60 are arranged between the anode terminal element 51a and the cathode terminal element 51c, and the membranes 4 are arranged between the anode terminal element 51a and the bipolar element 60, between bipolar elements 60 adjacent to each other, and between the bipolar element 60 and the cathode terminal element 51c, respectively.

In the bipolar electrolyzer 50 according to the present embodiment, as illustrated in FIGS. 6 to 9, the partition walls 1, the outer frames 3 and the membranes 4 define electrode compartments 5 through which the electrolyte passes.

In particular, in the bipolar electrolyzer 50 according to the present embodiment, a portion between the partition walls 1 of two adjacent bipolar elements 60 and a portion between the partition walls 1 of each terminal element and of the adjacent bipolar element 60 are respectively referred to as an electrolytic cell 65. Each electrolytic cell 65 includes: a partition wall 1, an anode compartment 5a and an anode 2a of one element; a membrane 4; and a cathode 2c, a cathode compartment 5c and a partition wall 1 of the other element.

In more detail, each electrode compartment 5 has an electrolyte inlet 5i for introducing electrolyte into the electrode compartment 5 and an electrolyte outlet 5o for drawing electrolyte out of the electrode compartment 5 at the boundary with the outer frame 3. More specifically, each anode compartment 5a includes an anode electrolyte inlet 5ai for introducing electrolyte into the anode compartment 5a and an anode electrolyte outlet 5ao for drawing electrolyte out of the anode compartment 5a. Similarly, each cathode compartment 5c includes a cathode electrolyte inlet 5ci for introducing electrolyte into the cathode compartment 5c and a cathode electrolyte outlet 5co for drawing electrolyte out of the cathode compartment 5c (see FIGS. 6 to 9).

In the anode compartment 5a and the cathode compartment 5c according to the present embodiment, an internal distributor may be provided to distribute electrolyte uniformly to the electrode surface in the electrolyzer 50. The electrode compartment 5 may also include a baffle plate having a function of limiting liquid flow in the electrolyzer 50, and further include a protrusion for generating a Karman vortex in the anode compartment 5a and the cathode compartment 5c to obtain uniform concentration and temperature of the electrolyte in the electrolyzer 50 and facilitate degassing of gas attached to the electrode 2 and the membrane 4.

A header 10, which is a pipe for distributing or collecting electrolyte, is typically attached to the bipolar electrolyzer 50. The header 10 includes an anode inlet header 10ai through which electrolyte enters an anode compartment 5a and a cathode inlet header 10ci through which electrolyte enters a cathode compartment 5c at a lower part of the outer frame 3 disposed at the periphery of the partition wall 1, and in the same manner, includes an anode outlet header 10ao through which electrolyte leaves the anode compartment 5a and a cathode outlet header 10co through which electrolyte leaves the cathode compartment 5c at an upper part of the outer frame 3 disposed at the periphery of the partition wall 1.

The header 10 attached to the bipolar electrolyzer 50 illustrated in FIGS. 6 to 9 is typically disposed as an internal header 10I and an external header 10O. In the present disclosure, either type may be adopted without any particular limitations.

FIG. 6 is a perspective view illustrating an example of an electrolysis compartment, headers and conduits for internal header type alkaline water electrolysis system according to the present embodiment.

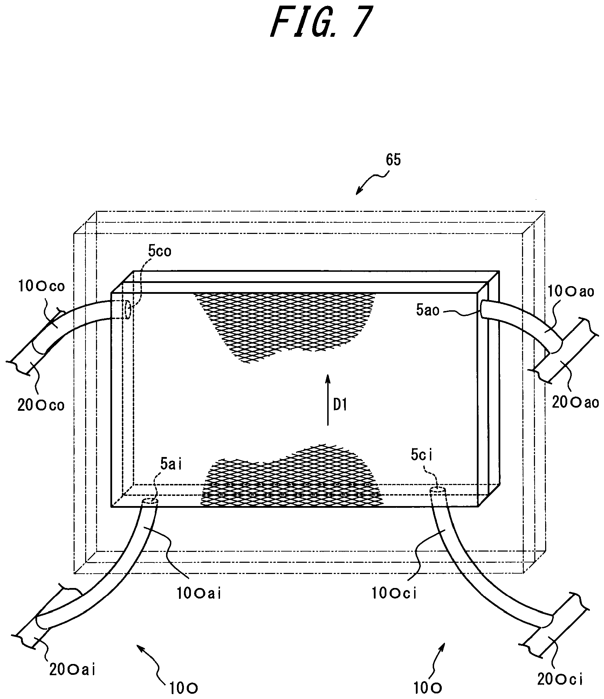

FIG. 7 is a perspective view illustrating an example of an electrolysis compartment, headers and conduits for an external header type alkaline water electrolysis system according to the present embodiment.

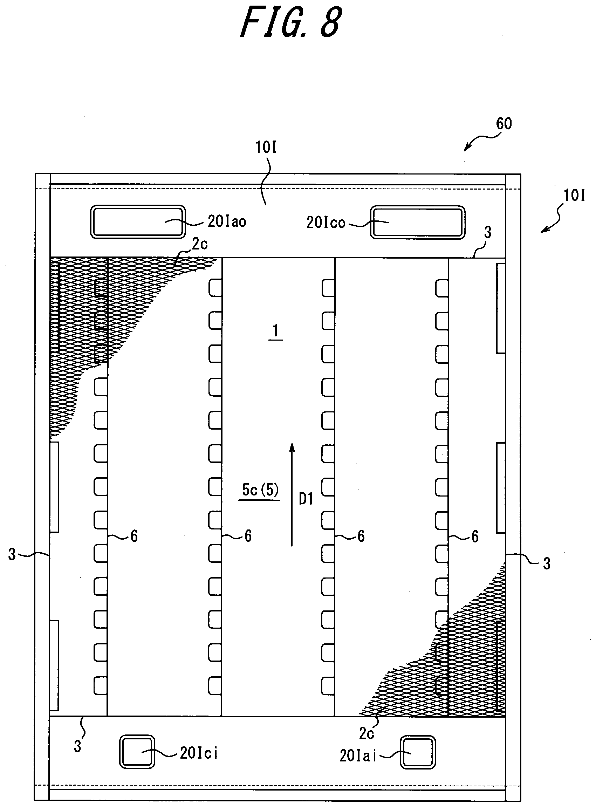

FIG. 8 is a plan view illustrating an example of the electrolyzer for the internal header type alkaline water electrolysis system according to the present embodiment.

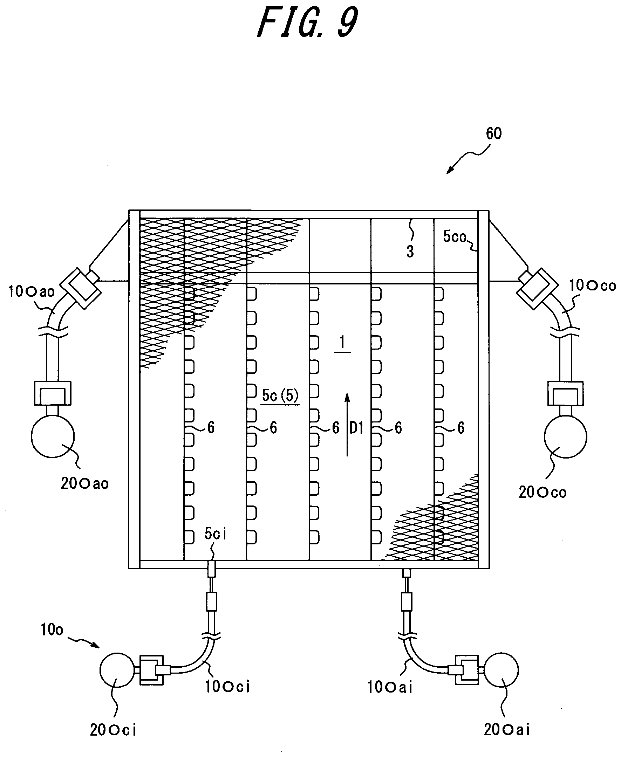

FIG. 9 is a plan view illustrating an example of the electrolyzer for the external header type alkaline water electrolysis system according to the present embodiment

In the example illustrated in FIGS. 6 and 8, the conduit 20, which is a pipe for collecting gas and electrolyte distributed or collected by the header 10 is attached to the header 10. In more detail, the conduit 20 includes a liquid distribution pipe communicating with an inlet header and a liquid collection pipe communicating with an outlet header.

In an example, the header 20 includes a liquid distribution pipe for anode 20Iai communicated with an anode inlet header 101ai and a liquid distribution pipe for cathode 20Ici communicated with a cathode inlet header 10Ici at a lower part of the outer frame 3, and in the same manner, the header 20 includes a liquid collection pipe for anode 20Iao communicated with an anode outlet header 10Iao and a liquid collection pipe for cathode 20Ico communicated with a cathode outlet header 10Ico at an upper part of the outer frame 3.

Typically, as illustrated in FIGS. 6 and 8, the anode inlet header 101ai, the cathode inlet header 101ci, the anode outlet header 10Iao and the cathode outlet header 10Ico are provided one for each electrode compartment 5. However, the present embodiment is not limited thereto, and they may be provided more than one for each electrode compartment 5.

Further, as illustrated in FIGS. 6 and 8, the liquid distribution pipe for anode 20Iai may communicate with all of the anode inlet header 101ai, the liquid distribution pipe for cathode 20Ici may communicate with all of the cathode inlet header 10Ici, the liquid collection pipe for anode 20Iao may communicate with all of the anode outlet header 10Iao, and the liquid collection pipe for cathode 20Ico may communicate with all of the cathode outlet header 10Ico.

In the present embodiment, the extending direction of the header 10 is not particularly limited. However, as the example illustrated in FIGS. 6 and 8, in viewpoint of ease of obtaining effects of the present disclosure, it is preferable that the inlet header (the anode inlet header 101ai, the cathode inlet header 10Ici) and the outlet header (the anode outlet header 10Iao, the cathode outlet header 10Ico) extend respectively parallel to a given direction D1 along the partition wall 1, and it is more preferable that any of the headers 10 extend parallel to a given direction D1 along the partition wall 1.

Note that "extending parallel to a given direction D1 along the partition wall 1" does not mean that "extending strictly in the same direction as the given direction D1 along the partition wall 1," and it includes the case where "each header extends in the direction inclined within a range of 10° or less, for example, relative to the given direction D1 along the partition wall 1. Note that the inclination angle is preferably 5° or less, and more preferably 2° or less.

In the present embodiment, the extending direction of the conduit 20 is not particularly limited. However, as the example illustrated in FIGS. 6 and 8, in viewpoint of ease of obtaining effects of the present disclosure, it is preferable that the liquid distribution pipe (the liquid distribution pipe for anode 20Iai, the liquid distribution pipe for cathode 20Ici) and the liquid collection pipe (the liquid collection pipe for anode 20Iao, the liquid collection pipe for cathode 20Ico) extend respectively in the direction perpendicular to the partition wall 1, and it is more preferable that any of the conduits 20 extend in the direction perpendicular to the partition wall 1.

Note that "extending in the direction perpendicular to the partition wall 1" herein does not mean that "extending strictly in the direction perpendicular to the partition wall 1," and it includes the case where "each header extends in the direction inclined within a range of 45° or less when viewed from the direction along the partition wall 1, for example. Note that the inclination is preferably 30° or less, and more preferably 15° or less.

In the example illustrated in FIGS. 7 and 9, the conduit 20, which is a pipe that collects gas and electrolyte distributed or collected by the header 10 is attached to the header 10. In more detail, the conduit 20 includes a liquid distribution pipe communicating with the inlet header and a liquid collection pipe communicating with the outlet header.

In an example, a liquid distribution pipe for anode 20Oai communicating with the anode inlet header 10Oai and a liquid distribution pipe for cathode 20Oci communicating with the cathode inlet header 10Oci are included at a lower part of the outer frame 3, and in the same manner, a liquid collection pipe for anode 20Oao communicating with the anode outlet header 10Oao and a liquid collection pipe for cathode 20Oco communicating with the cathode outlet header 10Oco are included on each side of the outer frame 3.

Typically, as illustrated in FIGS. 7 and 9, although the anode inlet header 10Oai, the cathode inlet header 10Oci, the anode outlet header 10Oao and the cathode outlet header 10Oco are provided one for each electrode compartment 5, the present embodiment is not limited thereto, and they may be provided more than one for each electrode compartment 5.

Further, normally, although the liquid distribution pipe for anode 20Oai, the liquid distribution pipe for cathode 20Oci, the liquid collection pipe for anode 20Oao and the liquid collection pipe for cathode 20Oco are provided one for each electrode compartment 5, the present embodiment is not limited thereto, and each pipe may be used by more than one electrode compartments 5.

In the present embodiment, the positional relationship between the electrode compartment 5 and the header 10 is not particularly limited, and as illustrated in FIGS. 7 and 9, when the bipolar element 60 is used such that the given direction D1 along the partition wall 1 is a vertical direction, the inlet header may be located on the bottom or the side of the electrode compartment 5 (in the drawing, on the bottom), and the outlet header may be located on the top or the side of the electrode compartment 5 (in the drawing, on the side). Further, the liquid distribution pipe communicating with the inlet header is located on the bottom or the side of the electrode compartment 5 (in the drawing, on the bottom), and the liquid collection pipe communicating with the outlet header may be located on the top or the side of the electrode compartment 5 (in the drawing, on the side).

In the present embodiment, the extending direction of the header 10 is not particularly limited

In the present embodiment, the extending direction of the conduit 20 is not particularly limited. However, as an example illustrated in FIGS. 7 and 9, in viewpoint of ease of obtaining effects of the present disclosure, it is preferable that the liquid distribution pipe (the liquid distribution pipe for anode 20Oai, the liquid distribution pipe for cathode 20Oci) and the liquid collection pipe (the liquid collection pipe for anode 20Oao, the liquid collection pipe for cathode 20Oco) extend respectively in the direction perpendicular to the partition wall 1, and it is more preferable that any of the conduits 20 extend in the direction perpendicular to the partition wall 1.

In the anode compartment 5a and the cathode compartment 5c according to the present embodiment, in viewpoint of the water electrolysis efficiency, it is preferable that the inlet header and the outlet header are Ref. No. PO180122-PCT-EPC (17/95) provided remotely. It is also preferable that they are provided opposite each other across the center of the electrode compartment 5, and it is still preferable that, as illustrated in FIGS. 6 to 9, when the shape of the partition wall 1 is rectangular shape in a plan view, they are provided such that they are symmetrical with respect to the center of the rectangular.

In the example illustrated in FIGS. 6 to 9, the electrode compartment 5 has a cuboid shape as a result of the partition wall 1 of a rectangular shape in a plan view and the membrane 4 of a rectangular shape in a plan view being arranged in parallel to each other and as a result of an inner surface on the partition wall 1 side of the cuboid outer frame 3 provided at the periphery of the partition wall 1 being perpendicular to the partition wall 1. However, in the present disclosure, the shape of the electrode compartment 5 is not limited to cuboid as illustrated. It may be changed appropriately depending on the shapes of the partition wall 1 and the membrane 4 in a plan view, an angle formed by the inner surface on the partition wall 1 side of the outer frame 3 and the partition wall 1, and may be any shape as far as the effects of the present disclosure can be obtained.

- In the present embodiment, the positional relationship between the electrode compartment 5 and the header 10 is not particularly limited, and as illustrated in FIGS. 6 to 9, when the bipolar element 60 is used such that the given direction D1 along the partition wall 1 is a vertical direction, the inlet header may be located on the bottom or the side of the electrode compartment 5 (in the drawing, on the bottom), the outlet header may be located on the top or the side of the electrode compartment 5 (in the drawing, on the top), the liquid distribution pipe communicating with the inlet header may be located on the bottom or the side of the electrode compartment 5 (in the drawing, on the bottom), and the liquid collection pipe communicating with the outlet header may be located on the top or the side of the electrode compartment 5 (in the drawing, on the top).

Note that, in the bipolar electrolyzer 50 of the alkaline water electrolysis system 70 according to the present embodiment, in order to decrease a convection in the electrolysis compartment 5 caused by disturbance of gas and liquid in the electrolysis compartment 5 to suppress a local increase in the electrolyte temperature, a plurality of distributors 6 may be arranged in parallel with the given direction D1 along the partition wall 1.

It is preferable that the electrolyzer 50 for alkaline water electrolysis system 70 according to the present embodiment has 50 to 500 pieces of bipolar elements 60, more preferably 70 to 300 pieces of bipolar elements 60, and particularly preferably 100 to 200 pieces of bipolar elements 60.

A decrease in log mitigates the influence of the leak current to the gas purity. On the other hand, an increase in log makes it difficult to distribute electrolyte to each electrolytic cell 65 uniformly. In the case of less than the lower limit or more than the upper limit, it will be difficult to obtain both of an effect of enabling a stabilized electrical control system by decreasing self-discharge caused when power supply is stopped and an effect of enabling realization of power storage with high efficiency, more specifically, a decrease in pump power and a reduction in leak current.

When the number (log) of the bipolar element 60 is increased excessively, it may cause production of the electrolyzer 50 to be difficult, and when a lot of bipolar elements 60 with poor production accuracy are stacked, the sealing surface pressure can easily be inhomogeneous, which will cause electrolyte or gas leakage.

The following provides a description of details of the components of the bipolar electrolyzer 50 for alkaline water electrolysis system 70 according to the present embodiment.

In the following, preferred embodiments for enhancing the effect of the present disclosure are also described in detail.

### - Partition wall -

In the present embodiment, the shape of the partition wall 1 may be a plate-like shape having a predetermined thickness, yet is not particularly limited.

The shape of the partition wall 1 in a plan view is not particularly limited, and it may be a rectangular shape (such as a square or a rectangle) or a circular shape (such as a circle or an ellipse), where a rectangular shape may have a rounded corner.

Note that the partition wall 1 may be used such that, typically, the given direction D1 along the partition wall 1 is a vertical direction. More specifically, as illustrated in FIGS. 6 to 9, when the shape of the partition wall 1 in a plan view is rectangular, it may be used such that the given direction D1 along the partition wall 1 is the same direction as one of two sets of sides opposed to each other. Herein the aforementioned vertical direction may also be referred to as the electrolyte passing direction.

From the viewpoint of achieving uniform supply of electric power, each partition wall is preferably made of a material having conductivity, and from the viewpoint of alkali resistance and heat resistance, preferred materials include nickel, nickel alloy, mild steel, and nickel alloy plated with nickel.

### - Electrode -

In hydrogen production by alkaline water electrolysis according to the present embodiment, reduction of energy consumption, specifically, reduction of bath voltage presents a significant challenge. Since the bath voltage greatly depends on the electrode 2, the performance of the electrode 2 is important.

In addition to the voltage required for the electrolysis of water that is theoretically determined, the electrolysis voltage for alkaline water electrolysis also includes an overvoltage of an anode reaction (generating oxygen), an overvoltage of a cathode reaction (generating hydrogen), and a voltage dependent on the distance between the anode 2a and the cathode 2c. As used herein, the term "overvoltage" refers to a voltage that needs to be applied excessively beyond the theoretical decomposition potential to cause a certain current flow, and its value depends on the current value. When the same current is flowed, use of electrodes 2 with low overvoltage will decrease power consumption.

To provide low overvoltage properties, the requirements for the electrode 2 include high conductivity, high oxygen generation ability or (hydrogen generation ability), and high wettability of the electrolyte on the surface of the electrode 2.

It is also noted here that the electrode 2 for alkaline water electrolysis having low overvoltage properties is less susceptible, even in the case of using an unstable current source such as renewable energy, to corrosion of the substrate and the catalyst layer of the electrode 2, detachment of the catalyst layer, dissolution into the electrolyte, and adhesion of inclusions to the membrane 4.

The electrode 2 of the present embodiment is preferably a porous body from the perspectives of using a larger surface area for electrolysis and removing the gas generated by electrolysis efficiently from the surface of the electrode 2. In particular, in the case of a zero-gap electrolyzer, it is necessary to remove the gas evolved from the back side of a surface in contact with the membrane 4, and it is preferable that the surface in contact with the membrane of the electrode 2 and the opposite surface penetrate each other.

Examples of the porous body include plain weave mesh, punching metal, expanded metal, metal foam, and the like.

A substrate may be used by itself as the electrode 2 according to the present embodiment, or, alternatively, an electrode having a catalyst layer with high reaction activity on the surface of a substrate may be used. However, it is preferable to use an electrode having a catalyst layer with high reaction activity on the surface of a substrate.

Although the material of the substrate is not particularly limited, mild steel, stainless steel, nickel, and nickel-based alloys are preferable in terms of resistance to the operating environment.

The catalyst layer of the anode 2a preferably has high oxygen producing ability. Nickel, cobalt, iron, a platinum group element, or the like may be used for the catalyst layer of the anode. In order to achieve the desired activity and durability, the catalyst layer may be formed by using any of these examples in the form of a simple substance of metal, a compound such as an oxide, a complex oxide or alloy of a plurality of metal elements, or a mixture thereof. Specific examples include nickel plating, alloy plating of nickel and cobalt, nickel and iron, and the like, complex oxides including nickel and/or cobalt such as LaNiO₃, LaCoO₃, and NiCo₂O₄, compounds of platinum group elements such as iridium oxide, carbon materials such as graphene, and the like. Organic substances such as polymers may be contained in order to improve durability and adhesion to the substrate.

The catalyst layer of the cathode 2c preferably has high hydrogen producing ability and durability. Nickel, cobalt, iron, a platinum group element, or the like may be used for the catalyst layer of the cathode 2c. In order to achieve the desired activity and durability, the catalyst layer may be formed by using a simple substance of metal such as palladium, iridium, platinum, gold, ruthenium, rhodium, cerium, nickel, cobalt, tungsten, iron, molybdenum, silver, copper, zirconium, titanium, hafnium, and lanthanoids, a compound such as an oxide, a complex oxide or alloy of a plurality of metal elements, or a mixture thereof and carbon materials such as grapheme, and the like.

An excessively thick catalyst layer may increase electric resistance and raise the overvoltage, whereas an excessively thin catalyst layer may lead to deterioration of the electrode 2 and raised overvoltage due to dissolution or detachment of the catalyst resulting from extended electrolysis or stop of electrolysis.

For these reasons, a catalyst layer thickness of not less than 0.2 µm and not more than 1,000 µm is preferable, and a catalyst layer thickness of not less than 0.5 µm and not more than 300 µm is more preferable.

The thickness of a catalyst layer can be measured by, for example, observing a cross-section of the electrode 2 using an electron microscope.

Examples of methods by which the catalyst layer may be formed on the substrate include: a thermal spraying method such as plating or plasma spraying; a thermal decomposition method including applying a precursor layer solution onto the substrate and subsequently performing heating thereof; a method including mixing a catalyst substance with a binder component and immobilizing it on a substrate; and a vacuum film-forming method such as sputtering.

### - Outer frame -

Although the shape of outer frame 3 according to the present embodiment is not particularly limited as long as it can border the corresponding partition wall 1, the outer frame 3 may have a shape including an inner surface extending along an extension of the partition wall 1 in a direction perpendicular to the plane of the partition wall 1.

The shape of the outer frame 3 is not particularly limited, and may be appropriately determined depending on the shape of the partition wall 1 in a plan view.

The material of the outer frame 3 is preferably a material having conductivity. From perspectives of alkali resistance and heat resistance, nickel, nickel alloy, mild steel, and nickel alloy plated with nickel are preferable.

### - Membrane -

An ion permeable membrane 4 is used in the bipolar electrolyzer 50 for alkaline water electrolysis system 70 according to the present embodiment in order that produced hydrogen gas and oxygen gas can be separated from one another while still conducting ions. This ion permeable membrane 4 may be an ion exchange membrane having ion exchange ability or a porous membrane through which electrolyte can permeate. The ion permeable membrane 4 preferably has low gas permeability, high ion conductivity, low electron conductivity, and high strength.

### -- Porous membrane --

The porous membrane has a plurality of fine through-holes, and has a structure that permits the electrolyte to pass through the membrane 4. Control of the porous structure such as pore size, porosity, and hydrophilicity is very important since the electrolyte permeates into the porous membrane to develop ion conduction. On the other hand, the porous membrane is required to prevent not only the electrolyte but also the generated gas from passing therethrough, that is, to have gas barrier properties. From this viewpoint control of the porous structure is also important.

The porous membrane has a plurality of fine through-holes, and may be, for example, a polymeric porous membrane, an inorganic porous membrane, a woven fabric, or a nonwoven fabric. These may be prepared with known techniques.

Examples of methods by which a polymeric porous membrane may be produced include a phase inversion method (microphase separation method), an extraction method, a stretching method, and a wet gel stretching method. The phase inversion method (microphase separation method) is a method in which a solution obtained by dissolving a polymeric material in a good solvent is used to prepare a film and then porosity is induced by subjecting the film to phase separation in a poor solvent (non-solvent induced phase separation method). The extraction method is a method in which an inorganic powder such as calcium carbonate is kneaded with a polymeric material, a film is prepared, and then the inorganic powder is dissolved and extracted to induce porosity. The stretching method is a method in which a film of a polymeric material having a certain crystal structure is stretched under certain conditions to open pores in the film. The wet gel stretching method is a method in which a polymeric material is caused to swell using an organic solvent such as liquid paraffin and is used to form a gel-like sheet, the sheet is stretched under certain conditions, and then the organic solvent is extracted and removed.

Examples of methods by which an inorganic porous membrane may be produced include a sintering method. In the sintering method, a shaped product obtained through pressing or extrusion is baked and is unified in a state with pores remaining therein.

Examples of methods by which a nonwoven fabric may be produced include a spunbond method and an electrospinning method. The spunbond method is a method in which filaments spun from melted pellets are bonded by hot rolling and are thereby unified in the form of a sheet. The electrospinning method is a method in which spraying is performed while applying a high voltage between a syringe containing molten polymer and a collector so as to accumulate thinly elongated fibers on the collector.

The porous membrane preferably contains a polymeric material and hydrophilic inorganic particles. The presence of hydrophilic inorganic particles imparts hydrophilicity on the porous membrane.

### --- Polymeric material ---

Examples of polymeric materials that may be used include polysulfone, polyethersulfone, polyphenylsulfone, polyvinylidene fluoride, polycarbonate, tetrafluoroethylene-perfluoroalkyl vinyl ether copolymer, tetrafluoroethylene-ethylene copolymer, polyvinylidene fluoride, polytetrafluoroethylene, perfluorosulfonic acid polymer, perfluorocarboxylic acid polymer, polyethylene, polypropylene, polyphenylene sulfide, poly (p-phenylenebenzobisoxazole), polyketone, polyimide, and polyetherimide. Of these polymeric materials, polysulfone, polyethersulfone, polyphenylsulfone, polyphenylene sulfide, and polytetrafluoroethylene are preferable, and polysulfone is more preferable. One of these polymeric materials may be used individually, or two or more of these polymeric materials may be used together.

By using polysulfone, polyethersulfone, or polyphenylsulfone as the polymeric material, resistance to high temperature and high concentration alkali solution can be further improved.

Moreover, the membrane 4 can be more simply prepared by adopting a method such as non-solvent induced phase separation. Particularly in a case in which polysulfone is used, the pore diameter can be more accurately controlled.

Polysulfone, polyethersulfone, or polyphenylsulfone may be subjected to crosslinking treatment. The weight-average molecular weight of polysulfone, polyethersulfone, or polyphenylsulfone that has undergone crosslinking treatment, in terms of standard polystyrene-equivalent weight-average molecular weight, is preferably not less than 40,000 and not more than 150,000. The method of crosslinking treatment is not particularly limited and may be crosslinking through irradiation with radiation such as an electron beam or γ-rays, thermal crosslinking using a crosslinking agent, or the like. Note that the standard polystyrene-equivalent weight-average molecular weight can be measured by GPC.

### --- Hydrophilic inorganic particles ---

It is preferable that the porous membrane contains hydrophilic inorganic particles to develop high ion permeability and high gas barrier properties. The hydrophilic inorganic particles may be attached to the surface of the porous membrane or a part thereof may be buried in the polymeric material constituting the porous membrane. When the hydrophilic inorganic particles are contained in voids in the porous membrane, they are difficult to be separated from the porous membrane, and as a result the porous membrane performance can be maintained for a long time.

Examples of hydrophilic inorganic particles include at least one inorganic material selected from a group consisting of, for example: oxide or hydroxide of zirconium, bismuth and cerium; oxide of IV group elements in a periodic table; nitride of IV group elements in a periodic table and carbide of IV group elements in a periodic table. Of these, in terms of chemical stability, oxide of zirconium, bismuth and cerium and oxide of IV group elements in a periodic table are more preferable, oxide of zirconium, bismuth and cerium is more preferable, and zirconium oxide is still more preferable.

### -- Porous support --

When a porous membrane is used as the membrane 4, the porous membrane may be used with a porous support. It is preferable that the porous membrane includes a porous support. It is more preferable that the porous membrane is stacked on both surfaces of the porous support, or a porous membrane may be stacked on both surfaces of the porous support in a symmetrical manner.

A porous support may be included to further improve the strength of the membrane 4. For example, the membrane 4 can be prevented from being cut, torn or stretched due to mechanical stress. In a structure in which a porous membrane is stacked on both surfaces of the porous support, even if damages or holes (pin holes or the like) are generated on one surface of the porous support, gas barrier properties can be ensured by a porous membrane stacked on the other porous support. In a structure in which porous membranes are stacked on both surfaces of the porous support in a symmetrical manner, curling of the membrane can be effectively prevented, and handleability during transportation or installation of a membrane is further improved.

Materials of the porous support are not particularly limited, and may preferably be a material that does not substantially reduce ion permeability of the electrolyte in the membrane 4. Materials of the porous support are not particularly limited, and examples include, for example, polyphenylene sulfide, polyethylene, polypropylene, a fluorine-containing resin, p-phenylenebenzobisoxazole, polyketone, polyimide and polyetherimide. Of these polyphenylene sulfide may preferably be contained. When polyphenylene sulfide is used, an excellent durability is exhibited to high temperature and highly concentrated alkaline solutions, and an excellent chemical stability is also exhibited to active oxygen generated from the anode 2a during electrolysis of water. Furthermore, for its ease of processing into a variety of forms such as a woven fabric, a nonwoven fabric or the like, it can be appropriately adjusted according to the purpose or the operating environment. One of these materials may be used individually, or two or more of these materials may be used together.

### -- Ion exchange membrane --

Examples of ion exchange membranes that may be used include cation exchange membranes that allow selective permeation of cations and anion exchange membranes that allow selective permeation of anions. Either type of ion exchange membrane may be used.

Known materials may be used as the material of the ion exchange membrane without any particular limitations. For example, a fluorine-containing resin or a modified resin of a polystyrene-divinylbenzene copolymer can suitably be used. In particular, a fluorine-containing ion exchange membrane is preferable due to excelling in terms of heat resistance, chemical resistance, and the like.

### ((Zero-gap structure))

In the bipolar element 60 of each zero-gap cell, it is preferable to adopt a configuration in which a spring is disposed between an electrode 2 and the corresponding partition wall 1 and in which the electrode 2 is supported by the spring as a means of reducing inter-electrode distance. For example, in a first example, a spring made of a conductive material may be attached to the partition wall 1, and the electrode 2 may be attached to the spring. In a second example, a spring may be attached to electrode ribs 6 that are attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce non-uniformity in the pressure of the electrode 2 against the membrane 4.

Further, by strengthening the rigidity of the other electrode 2 paired with the electrode 2 supported through the elastic body, the other electrode 2 is structured to have little deformation even when pressed. On the other hand, by providing the electrode 2 supported through the elastic body with a flexible structure capable of deforming when pressed against the membrane 4, irregularities due to tolerance of fabrication accuracy of the electrolytic cell 65, electrode deformation, and the like can be absorbed, and a zero-gap structure can be maintained.

More specifically, a structure of at least three layers may be adopted in which a current collector 2r is attached at the tips of distributors 6 (ribs 6), a conductive elastic body 2e is attached at an upper surface side of the current collector 2r (i.e., at an opposite side to the side of the partition wall 1), and an electrode 2 is stacked at an upper surface side thereof (i.e., at a part that is adjacent to the conductive elastic body 2e and becomes the membrane 4 side). The elastic body is composed by the current collector 2r and the conductive elastic body 2e.
- In the bipolar electrolyzer 50 for alkaline water electrolysis system 70 according to the present embodiment, a conductive elastic body 2e and a current collector 2r are provided between the cathode 2c or the anode 2a and the partition wall 1 such that the conductive elastic body 2e is interposed between the cathode 2c or the anode 2a and the current collector 2r.

### - Current collector -

The current collector 2r transmits electricity to the conductive elastic body 2e and/or the electrode 2 stacked thereon, supports the loads received from them, and has a role of allowing gas produced from the electrode 2 to pass to the side of the partition wall 1 unhindered. Accordingly, the current collector 2r is preferably in the form of an expanded metal, a punched porous plate, or the like. In this case, the open fraction of the current collector 2r is preferably within a range allowing hydrogen gas generated from the electrode 2 to escape to the side of the partition wall 1 unhindered. However, if the open fraction is too high, problems such as reduced strength of the current collector 2r and lower conductivity to the conductive elastic body 2e may arise, and if the open fraction is too low, this may adversely affect gas escape.

Nickel, nickel alloy, stainless steel, mild steel, and the like can be used as the material of the current collector 2r from perspectives of conductivity and alkali resistance, yet from the viewpoint of corrosion resistance, nickel and mild steel, stainless steel, and nickel alloy plated with nickel are preferred. A current collector 2r such as described above may be secured to ribs 6 by means such as spot welding and laser welding.

### - Conductive elastic body -

The conductive elastic body 2e is provided between a current collector 2r and an electrode 2 and is in contact with the current collector 2r and the electrode 2. The essential requirements thereof are that the conductive elastic body 2e transmits electricity to the electrode 2 and does not hinder diffusion of gas produced from the electrode 2. This is because if diffusion of gas is hindered, electric resistance increases and the area of the electrode 2 used for electrolysis decreases, resulting in lower electrolysis efficiency. The most important role of the conductive elastic body 2e is to bring the membrane 4 and the electrode 2 into close contact with each other by evenly applying an appropriate pressure to the electrode 2 so as not to damage the membrane 4.

Examples of preferable methods of fixing the electrode 2 for achieving a zero-gap structure Z include spot welding with the conductive elastic body 2e, fixing with pins made of metal or plastic, and pressing pressure through elasticity of the conductive elastic body 2e.

Further, the shape of the other electrode 2 paired with the electrode 2 supported through the elastic body is important, and the desirable shape thereof is a planar shape.

In general, the thickness of the electrode 2 is preferably approximately 0.7 mm to 3 mm. If the electrode is too thin, the electrode 2 may be deformed by pressure difference between the anode compartment 5a and the cathode compartment 5c or by pressing pressure, and this may, for example, lead to depression of an end part of the electrode 2, widening of the inter-electrode distance, and increased voltage.

### - Electrode compartment -

In the bipolar electrolyzer 50 according to the present embodiment, the partition walls 1, the outer frames 3, and the membranes 4 define electrode compartments 5 through which electrolyte passes as illustrated in FIGS. 6 to 9.

In the present embodiment, a header 10 of the bipolar electrolyzer may be disposed as an internal header 10I type or an external header 10O type. In the example illustrated, spaces occupied by the anode 2a and the cathode 2c themselves may be spaces inside the electrode compartment 5, for example. Further, in particularly, when a gas-liquid separation box is provided, the space occupied by the gas-liquid separation box may also be the space inside the electrode compartment 5.

### - Distributor -

In the bipolar electrolyzer 50 for alkaline water electrolysis system 70 according to the present embodiment, it is preferable that distributors 6 (an anode distributor 6a, a cathode distributor 6c) are attached to the partition wall 1, and the distributors 6 are physically connected to the electrodes 2. With this structure, the distributors 6 serve as supports for the electrodes 2, making it easier to maintain the zero-gap structure Z.

For each of the distributors 6, an electrode 2 may be disposed thereon, or a current collector 2r, a conductive elastic body 2e, and an electrode 2 may be disposed thereon in this order.

In the previously described example of bipolar electrolyzer 50 for alkaline water electrolysis system 70, a structure in which the distributor 6, the current collector 2r, the conductive elastic body 2e and the electrode 2 are stacked in this order is adopted in the cathode compartment 5c, whereas a structure in which the distributor 6 and the electrode 2 are stacked in this order is adopted in the anode compartment 5a.

Note that although a "distributors 6, the current collector 2r, the conductive elastic body 2e and the electrode 2" structure is adopted in the cathode compartment 5c and a "distributors 6 and the electrode 2" structure is adopted in the anode compartment 5a in the previously described example of the bipolar electrolyzer 50 for alkaline water electrolysis system 70, this is not a limitation in the present disclosure and the structure of "distributors 6, the current collector 2r, the conductive elastic body 2e and the electrode 2" may also be adopted in the anode compartment 5a.

The distributors 6 (anode distributors 6a, cathode distributors 6c) preferably have a role of transmitting current from the partition wall 1 to the anode 2a or cathode 2c in addition to a role of supporting the anode 2a or cathode 2c.

In the bipolar electrolyzer 50 for alkaline water electrolysis system 70 according to the present embodiment, it is preferable that at least part of the distributors 6 is conductive, and more preferable that the whole of the distributors 6 is conductive. This configuration can inhibit a rise in cell voltage due to electrode deflection.

A conductive metal is typically used as the material of distributors 6. For example, nickel-plated mild steel, stainless steel, nickel, or the like may be used.

The length of each distributor 6 (an anode distributor 6a, a cathode distributor 6c) may be appropriately determined based on the size of the partition wall 1.

The height of each distributor 6 may be appropriately determined based on the distance from the partition wall 1 to each flange, the thickness of the gasket 7, the thickness of each electrode 2 (an anode 2a, a cathode 2c) and the distance between the anode 2a and the cathode 2c.

Further, although the thickness of each distributor 6 may be 0.5 mm to 5 mm, or 1 mm to 2 mm, which is easy to use, in consideration of cost, productivity, strength, or the like, there is no particular limitation.

Although each electrode 2 and the current collector 2r are typically fixed to the distributor 6 by spot welding, other welding such as laser welding or the like may be used. Furthermore, they can be tied to the distributor 6 to closely fixed therewith by using a member such as wire and string. As with the anode 2a or the cathode 2c, each distributor 6 is fixed to the partition wall 1 by spot welding, laser welding, or the like.

### - Gasket -

In the bipolar electrolyzer 50 for alkaline water electrolysis system 70 according to the present embodiment, it is preferable that between the outer frames 3 bordering the partition walls 1, a gasket 7 is sandwiched together with the membrane 4.

The gasket 7 is used for providing a seal against electrolyte and produced gas between each of the bipolar elements 60 and the membrane 4 and between the bipolar elements 60, and can prevent leakage of electrolyte and produced gas to the outside of the electrolyzer and gas mixing between the electrode compartments.

The gasket 7 is generally configured with a quadrangular or annular shape obtained by hollowing out the electrode surface in conformity with the surface of the element contacting the frame body. A membrane 4 can be stacked between elements by sandwiching the membrane 4 with two such gaskets 7. Furthermore, it is also preferable that the gasket 7 comprises a slit part capable of accommodating the membrane 4 so as to be able to hold the membrane 4, and the gasket 7 is provided with an opening which allows the accommodated membrane 1 to be exposed on both surfaces of the gasket 7. In this manner, the gasket 7 can accommodate the edge part of the membrane 4 in the slit part and cover the end face of the edge part of the membrane 4. This configuration can more reliably prevent leakage of the electrolyte or gas from the end face of the membrane 4.

It is preferable that a protruding part is provided that protrudes from either one of surfaces of the gasket 7. With such protruding part, the protruding part is locally pushed during stacking, and the membrane 4 accommodated in the slit at the position corresponding to the protruding part is pushed by the gasket 7. Thus, the gasket 7 can hold the membrane 4 more firmly and prevent electrolyte and gas from leaking more easily.

The material of the gasket 7 is not particularly limited, and a known rubber material, resin material, or the like having insulation properties may be selected.

Specific examples of such rubber and resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluoro resin materials such as polytetrafluoroethylene (PTFE), tetrafluoroethylene/perfluoroalkyl vinyl ether copolymer (PFA), tetrafluoroethylene-ethylene copolymer (ETFE), chlorotrifluoroethylene-ethylene copolymer (ECTFE); and resin materials such as polyphenylene sulfide (PPS), polyethylene, polyimide, and polyacetal. Of these, ethylene-propylene-diene rubber (EPDM) and fluororubber (FR) are particularly preferable from the viewpoint of elastic modulus and alkali resistance.

A reinforcing material may be embedded in the gasket 7. This can inhibit squashing of the gasket 7 upon pressing when sandwiched between frames during stacking and makes it easier to prevent damage of the gasket 7.

A known metal material, resin material, carbon material, or the like can be used as such a reinforcing material. Specific examples include metals such as nickel and stainless steel, resins such as nylon, polypropylene, PVDF, PTFE, and PPS, and carbon materials such as carbon particles and carbon fiber.

Examples of preferred shape of the reinforcing material include woven fabric, nonwoven fabric, short fiber, porous membrane, or the like. A protection layer may be provided on the surface of the gasket 7. This improves adhesion between the gasket 7 and the element and alkali resistance of the gasket 7. Material of the protection layer may be chosen from the materials of the gasket 7.

An adhesive may be used in attachment of the gasket 7 to a bipolar element 60. An adhesive may be applied to one surface of the gasket 7 and then be attached to the outer frame 3 at one side of the element. Note that it is preferable that after drying the adhesive, water is applied onto the electrode surface of the bipolar element 60 so as to wet the electrode 2. In the case of a gasket 7 including a slit for accommodating the edge of the membrane 4 in order that the membrane 4 can be held, the gasket 7 may be attached in a state in which the membrane 4 is held thereby, or may be attached and subsequently used to hold the membrane 4.

### - Header -

The bipolar electrolyzer 50 for alkaline water electrolysis system 70 has a cathode compartment 5c and an anode compartment 5a for each electrolytic cell 65. In order to conduct an electrolysis reaction continuously in the electrolyzer 50, it is necessary to continuously supply an electrolyte that contains a sufficient amount of material to be consumed by electrolysis into the cathode compartment 5c and the anode compartment 5a of each electrolytic cell 65.

The electrolytic cell 65 is connected to an electrolyte supply/discharge plumbing system, referred to as a header 10, shared by a plurality of electrolytic cells 65. In general, the anode distribution pipe is referred to as an anode inlet header 10ai, the cathode distribution pipe is referred to as a cathode inlet header 10ci, the anode collection pipe is referred to as an anode outlet header 10ao, and the cathode collection pipe is referred to as a cathode outlet header 10co. Each electrolytic cell 65 is connected to each electrolyte distribution pipe and each electrolyte collection pipe through a hose or the like.

Although the material of the header 10 is not particularly limited, it is necessary to adopt a material that can sufficiently withstand corrosive properties of the electrolyte that is to be used, operating conditions such as pressure and temperature, and the like. The material of the header 10 may be iron, nickel, cobalt, PTFE, ETFE, PFA, polyvinyl chloride, polyethylene, or the like.

In the present embodiment, the extent of each electrode compartment 5 varies depending on the detailed structure of the outer frame 3 disposed at the periphery of the partition wall 1, and the detailed structure of the outer frame 3 varies depending on the form of arrangement of the header 10 (pipe for electrolyte distribution or collection) attached to the outer frame 3. Representative examples of forms of arrangement of the header 10 of a bipolar electrolyzer 50 are an internal header 10I type and an external header 10O type.

### - Internal header -

The internal header 10I is a type in which a bipolar electrolyzer 50 and a header 10 (a pipe for electrolyte distribution or collection) are unified.

More specifically, in an internal header 10I type bipolar electrolyzer 50, an anode inlet header 10ai and a cathode inlet header 10ci are disposed at a lower part inside the partition wall 1 and/or outer frame 3 and extend in a direction perpendicular to the partition wall 1, whereas an anode outlet header 10ao and a cathode outlet header 10co are disposed at an upper part inside the partition wall 1 and/or outer frame 3 and extend in a direction perpendicular to the partition wall 1.

The anode inlet header 101ai, the cathode inlet header 10Ici, the anode outlet header 10Iao, and the cathode outlet header 10Ico that are included inside the internal header-type bipolar electrolyzer 50 are referred to collectively as an internal header 10I.

In an example of the internal header 10I type, the anode inlet header 101ai and the cathode inlet header 10Ici are included in part of a lower part of the outer frame 3 disposed at the periphery of the partition wall 1, and similarly, the anode outlet header 10Iao and the cathode outlet header 10Ico are included in part of an upper part of the outer frame 3 disposed at the periphery of the partition wall 1.

### - External header -

The external header 10O is a type in which a bipolar electrolyzer 50 and a header 10 (a pipe for electrolyte distribution or collection) are separate.

In the case of an external header 10O type bipolar electrolyzer 50,the anode inlet header 10Oai and the cathode inlet header 10Oci are separately provided in a manner such as to run alongside the electrolyzer 50 in a direction perpendicular to the current-carrying surface of the electrolytic cell 65. The anode inlet header 10Oai and the cathode inlet header 10Oci are connected to each electrolytic cell 65 by a hose.

The anode inlet header 10Oai, the cathode inlet header 10Oci, the anode outlet header 10Oao and the cathode outlet header 10Oco that are externally connected to the external header 10O type bipolar electrolyzer 50 are collectively referred to as an external header 10O.

In the example of an external header 10O type, lumen-like members are provided at through-holes for the header 10 in a lower part of the outer frame 3 disposed at the periphery of the partition wall 1, and these lumen-like members are connected to the anode inlet header 10ai and the cathode inlet header 10ci. Likewise, lumen-like members (for example, a hose or a tube) are provided at through-holes for the header 10 in an upper part of the outer frame 3 disposed at the periphery of the partition wall 1, and these lumen-like members are connected to the anode outlet header 10ao and the cathode outlet header 10co.

The bipolar electrolyzer 50 of inner header 10I type or outer header 10O type may include a gas-liquid separation box for separating electrolyte from gas generated by electrolysis inside the bipolar electrolyzer. The installation position of the gas-liquid separation box is not particularly limited, and the gas-liquid separation box may be installed between the anode compartment 5a and the anode outlet header 10ao, or between the cathode compartment 5c and the cathode outlet header 10co.

The surface of the gas-liquid separation box may be coated with a coating material that can sufficiently withstand corrosive properties of the electrolyte and operating conditions such as pressure and temperature. An electrically insulating material may be adopted as the coating material with the objective of increasing electric resistance of a leakage current circuit inside the electrolyzer. For example, EPDM, PTFE, ETFE, PFA, polyvinyl chloride, polyethylene, or the like may be adopted as the coating material.

### (Alkaline water electrolysis system)

FIG. 1 schematically illustrates an example of the alkaline water electrolysis system according to the present embodiment.

The alkaline water electrolysis system 70 according to the present embodiment includes, for example, an electrolyzer 50, a feed pump 71 that circulates electrolyte, a gas-liquid separation tank 72 (a hydrogen separation tank 72h, an oxygen separation tank 72o) that separates electrolyte from hydrogen and/or oxygen and a water replenisher 73 that replenishes water consumed by electrolysis, as illustrated in FIG. 1.

According to the alkaline water electrolysis system 70 of the present embodiment, self-discharging caused when power supply is stopped is reduced during operation with the fluctuating power supply using renewable energy or the like, and stabilized electrical control system can be obtained.

The alkaline water electrolysis system 70 according to the present embodiment includes an electrolyzer 50 having an electrode compartment 5, and a controller 91 that controls the circulation flow rate of electrolyte depending on the current density applied to the electrode compartment 5.

It is preferable that the controller 91 is one of those selected from the inverters attached to the liquid distribution pipe 20i (20ai, 20ci) that distributes electrolyte to the electrode compartment 5. In addition to the aforementioned, the controller 91 may be a control device that controls ON/OFF of pump.

In the present embodiment, it is preferable that the circulation flow rate is decreased as the current density is decreased. Further, it is preferable that the circulation flow rate is increased as the current density is increased. This enables prevention of decrease in gas purity and excessive rise in operating temperature, and the water electrolysis system can be stably operated under a fluctuating power supply such as renewable energy.

The ratio of the circulation flow rate to the current density is preferably 1 × 10⁶ m⁵/C to 1 × 10⁹ m⁵/C.

It is preferable that the alkaline water electrolysis system 70 further includes a detector that detects stop of power supply and a controller that automatically stops a feed pump. With the detector and the controller, a decrease in gas purity can be effectively reduced even under a fluctuating power supply such as renewable energy without artificial manipulation.

It is preferable that the alkaline water electrolysis system 70 includes an electrolyzer having a cathode compartment and a hydrogen tank that is connected to the cathode compartment through a hydrogen introduction pipe on the upstream side in the electrolyte passing direction and stores hydrogen gas to be introduced into the cathode compartment.

As an example illustrated in FIG. 1, the alkaline water electrolysis system 70 according to the present embodiment has a hydrogen gas line 100h connected to the electrolyzer 50 so as to communicate with a hydrogen separation tank 72h and an oxygen gas line 100o connected to the electrolyzer 50 so as to communicate with an oxygen separation tank 72o.

In the alkaline water electrolysis system 70 according to an example, as illustrated in FIG. 1, gas concentration meters (an oxygen concentration meter (concentration meter of hydrogen in oxygen gas) O₂I, a hydrogen concentration meter (concentration meter of oxygen in hydrogen gas) H₂I), a pressure gauges PI, thermometers TI, a pressure control valve PV1 provided in series with the hydrogen gas line 100h, a pressure control valve PV2 provided in series with the oxygen gas line 100o and pressure control valves (valves) 80 to 87 are arranged to at least one of the hydrogen gas line 100h and the oxygen gas line 100o.

According to an example of FIG. 1, a line running from the oxygen separation tank 72o to a seal pot 92 through a mist separator 90 connected in series with respect to the line and the pressure control valve PV2 is provided. In this example, a bypass is also provided, which runs from the oxygen separation tank 72o to the seal pot 92 through the oxygen concentration meter (concentration meter of hydrogen in oxygen gas) O₂I connected in parallel with the line. As illustrated in FIG. 1, the aforementioned line and the bypass are connected via a gas cooler 91.

Similarly, in the example illustrated in FIG. 1, a line running from the hydrogen separation tank 72h to a seal pot 92 via a mist separator 90 connected in series with respect to the line and the pressure control valve PV1 is provided. In this example, a bypass is also provided, which runs from the hydrogen separation tank 72h to the seal pot 92 via the hydrogen concentration meter (concentration meter of oxygen in hydrogen gas) H₂I connected in parallel with the line. Further, as illustrated in FIG. 1, the aforementioned line and the bypass are connected via a gas cooler 91.

The alkaline water electrolysis system 70 according to the present embodiment may further has a mechanism (not illustrated) that adjusts the opening of the pressure control valves 80 to 87. With this configuration, a differential pressure between the hydrogen gas line 100h and the oxygen gas line 100o can be kept constant more accurately.

In the alkaline water electrolysis system 70 according to an example illustrated in FIG. 1, the gas concentration meter is arranged in parallel with the pressure control valve, which enables measurement of gas concentration by using a difference in pressure between the upstream side and the downstream side of the concentration meter, and thus the alkaline water electrolysis system 70 has an advantage that a pump used for a gas concentration meter is no longer needed.

Further, in the alkaline water electrolysis system 70 according to an example illustrated in FIG. 1, the oxygen concentration meter (concentration meter of hydrogen in oxygen gas) O₂I is arranged in parallel with the pressure control valve PV2 which is provided in series with respect to the oxygen gas line 100o, and the oxygen concentration meter O₂I line is provided with a mechanism (not illustrated) that can control the pressure and/or the flow rate.

In the alkaline water electrolysis system 70 according to an example, the hydrogen concentration meter (concentration meter of oxygen in hydrogen gas) H₂I is arranged in parallel with the pressure control valve PV1 provided in series with the hydrogen gas line 100h, and the line of the hydrogen concentration meter H₂I is provided with a mechanism (not illustrated) that can control the pressure and/or the flow rate.

The aforementioned mechanism that can control the flow rate, or the like, of the gas concentration meter line may be manually operated or automatically operated.

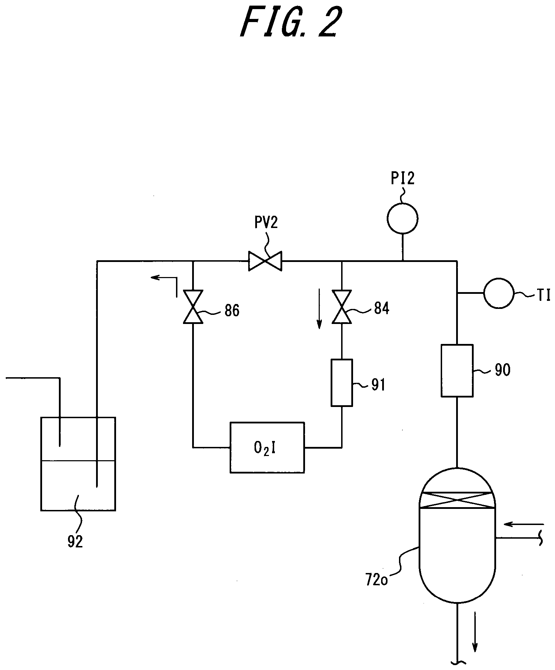

FIG. 2 schematically illustrates a part of an example of the alkaline water electrolysis system according to the present embodiment. Note that FIG. 2 illustrates only the side of the oxygen gas line 100o of the system.

In the following, the elements similar to those of the alkaline water electrolysis system 70 according to an example illustrated in FIG. 1 are assigned with the same reference signs and the explanation thereof is omitted.

In the alkaline water electrolysis system 70 illustrated in FIG. 2, the gas concentration meter (particular the oxygen concentration meter O₂I in FIG. 2) is arranged in parallel with the pressure control valve (particular the pressure control valve PV2 in FIG. 2). More specifically, in the oxygen concentration meter O₂I, the intake side is arranged between the oxygen separation tank 72o and the pressure control valve PV2, and the discharge side is arranged between the pressure control valve PV2 and the seal pot 92.

This case has an advantage that a pump used for the aforementioned gas concentration meter is no longer needed.

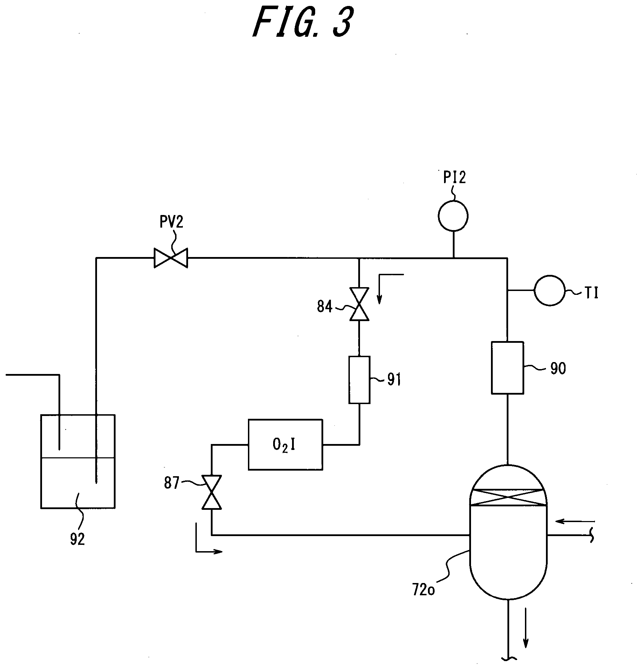

FIG. 3 schematically illustrates a part of another example of the alkaline water electrolysis system according to the present embodiment. Note that FIG. 3 illustrates only the side of the oxygen gas line 100o of the system.

In the following, the elements similar to those of the alkaline water electrolysis system 70 according to an example illustrated in FIG. 1 are assigned with the same reference signs and the explanation thereof is omitted.

In the alkaline water electrolysis system 70 illustrated in FIG. 3, the gas concentration meter (particular the oxygen concentration meter O₂I in FIG. 3) is arranged on the upstream side of the pressure control valve (particular the pressure control valve PV2 in FIG. 2). More specifically, the oxygen concentration meter O₂I is arranged between the oxygen separation tank 72o and the pressure control valve PV2. In the case of this example, it is preferable that gas is flowed to the oxygen concentration meter O₂I by using a pump or the like.

In the alkaline water electrolysis system 70 according to another example illustrated in FIG. 3, a gas concentration meter is arranged between the electrolyzer 50 and the pressure control valve, which enables measurement of concentration all the time and prevention of pressure drop.

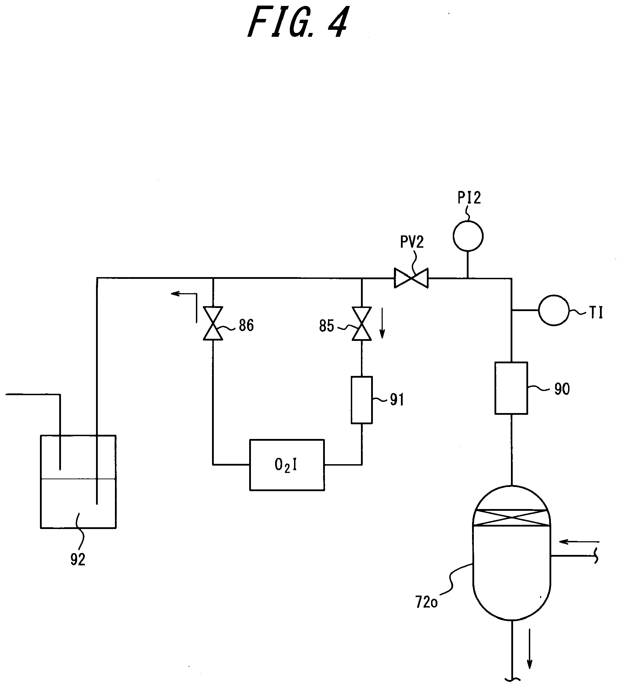

FIG. 4 schematically illustrates a part of yet another example of the alkaline water electrolysis system according to the present embodiment. Note that FIG. 4 illustrates only the oxygen gas line 100o side of the system.

In the following, the elements similar to those of the alkaline water electrolysis system 70 according to an example illustrated in FIG. 1 are assigned with the same reference signs and the explanation thereof is omitted. In the alkaline water electrolysis system 70 illustrated in FIG. 4, the gas concentration meter (particular the oxygen concentration meter O₂I in FIG. 4) is arranged on the downstream side of the pressure control valve (particular the pressure control valve PV2 in FIG. 4). More specifically, the oxygen concentration meter O₂I is arranged between the pressure control valve PV2 and the seal pot 92. In the case of this example, it is preferable that gas is flowed to the oxygen concentration meter O₂I by using a pump or the like.

In the following, components of the alkaline water electrolysis system 70 according to the present embodiment will be described.

### - Feed pump -

The feed pump 71 used in the present embodiment is not particularly limited, and may be appropriately determined.

### - Gas-liquid separation tank -

The gas-liquid separation tank 72 used in the present embodiment includes a hydrogen separation tank 72h that separates the electrolyte from the hydrogen gas and an oxygen separation tank 72o that separates the electrolyte from the oxygen gas.

The hydrogen separation tank 72h is connected to the cathode compartment 5c and the oxygen separation tank 72o is connected to the anode compartment 5a for use.

The gas-liquid separation tank 72 for alkaline water electrolysis system includes two tanks such as an oxygen separation tank 72o used for an anode compartment 5a and a hydrogen separation tank 72h used for a cathode compartment 5c.

The gas-liquid separation tank 72 for anode compartment 5a separates the oxygen gas generated in the anode compartment 5a from the electrolyte, and the gas-liquid separation tank 72 for cathode compartment 5c separates the hydrogen gas generated in the cathode compartment 5c from the electrolyte.

The mixture of the electrolyte and the gas generated that are discharged from the electrolytic cell 65 is flowed into the gas-liquid separation tank 72. If separation of gas from liquid is not appropriately done, when electrolyte of the cathode compartment 5c and electrolyte of the anode compartment 5a are mixed, oxygen gas and hydrogen gas are mixed, and as a result the gas purity is lowered. In the worst case, there is a danger of forming detonating gas.

The gas and the electrolyte flowed into the gas-liquid separation tank 72 are separated into the gas phase in the upper layer of the tank and the liquid phase in the lower layer of the tank. The degree of gas/liquid separation is determined based on the electrolyte flux in the gas-liquid separation tank 72, the floating velocity of bubbles in the gas generated and the retention time in the gas-liquid separation tank 72.

The electrolyte after gas is separated therefrom flows out from the outlet at the lower portion of the tank and flows into the electrolytic cell 65 again. Thus a circulation path is formed. Because the oxygen and the hydrogen gas discharged from the discharge port at the upper portion of the tank include alkaline mist, it is preferable that a device such as a mist separator and a cooler that can liquefy excessive mist and return it to the gas-liquid separation tank 72 is attached to the downstream of the discharge port.

The gas-liquid separation tank 72 can be provided with a liquid level gauge to see the liquid level of the electrolyte stored therein.

Further, it is preferable that the gas-liquid separation tank 72 includes a pressure relief valve, which enables safety reduction in pressure when pressure exceeds the set pressure even in the case where pressure increases due to the gas generated during electrolysis.

It is preferable that the inflow port to the gas-liquid separation tank 72 is located above the electrolyte face to improve gas/liquid separation performance. However, this is not restrictive.

It is preferable that the electrolyte level in the gas-liquid separation tank 72 to be located above the upper surface of the electrolyzer so as not to lower the liquid level in the electrolyzer when circulation is stopped. However, this is not restrictive.

It is preferable that a shutoff valve is attached between the electrolytic cell 65 and the gas-liquid separation tank 72. However, this is not restrictive.

### - Water replenisher -

The water replenisher 73 used for the present embodiment is not particularly limited, and may be appropriately determined.

Clean water may be used as water. However, in consideration of long-term operation, it is preferable to use ion-exchange water, RO water, ultrapure water or the like.

### - Others -

The alkaline water electrolysis system 70 according to the present embodiment may include a rectifier 74, an oxygen concentration meter 75, a hydrogen concentration meter 76, a flow meter 77, a pressure gauge 78, a heat exchanger and a pressure control valve 80 other than the electrolyzer 50, the gas-liquid separation tank 72 and the water replenisher 73.

The alkaline water electrolysis system 70 according to the present embodiment may preferably include a detector that detects stop of power supply and a controller that automatically stops a feed pump. With the detector and the controller, an influence of self-discharging can be efficiently reduced under a fluctuating power supply such as renewable energy without artificial manipulation.

### (Alkaline water electrolysis method)

The alkaline water electrolysis method according to the present embodiment can be conducted by using the alkaline water electrolysis system 70 according to the present embodiment.

In the alkaline water electrolysis method according to the present embodiment, the pressure control valve may be controlled such that it is fully closed when electrolysis is stopped.

With this method, pressure leak when electrolysis is stopped, a decrease in gas pressure due to a decrease in electrolyte temperature, and an increase in a differential pressure between the anode compartment side and the cathode compartment side can be prevented, and as a result a decrease in gas purity can be suppressed.

Note that "when electrolysis is stopped" refers to the point of time at which the passing current becomes 0 (zero), and for 30 seconds after that point of time, preferably 10 seconds after that point of time.

In the present embodiment, a difference in pressure between the hydrogen gas line and the oxygen gas line when electrolysis is stopped may be adjusted by obtaining pressure data from the pressure gauge of the hydrogen gas line and the pressure gauge of the oxygen gas line and by controlling the pressure control valve based on such pressure data.

The difference in pressure between the hydrogen gas line and the oxygen gas line (pressure on the cathode compartment side - pressure on the anode compartment side) when electrolysis is stopped may preferably be -10 to 10 kPa, and more preferably be -5 to 5 kPa.

In the following, preferable conditions for the alkaline water electrolysis method according to the present embodiment will be described.

The electrolyte used for the present embodiment may be alkaline aqueous solution in which alkaline salt is dissolved, and examples of which include NaOH aqueous solution, KOH aqueous solution, or the like.

Alkaline salt concentration may preferably be 20 wt% to 50 wt%, and more preferably be 25 wt% to 40 wt%.

In the present embodiment, KOH aqueous solution of 25 wt% to 40 wt% is particularly preferable in terms of ion conductivity, kinetic viscosity and freezing in cold temperatures.

In the alkaline water electrolysis method according to the present embodiment, it is preferable that the temperature of electrolyte in the electrolytic cell 65 is 80 °C to 130 °C.

With the aforementioned temperature range, the members of the electrolysis device 70 such as the gasket 7 and the membrane 4 can be effectively prevented from being deteriorated while high electrolysis efficiency is maintained.

The temperature of the electrolyte may further preferably be 85 °C to 125 °C, and particularly preferably be from 90 °C to 115 °C.

In the alkaline water electrolysis method according to the present embodiment, the current density applied to the electrolytic cell 65 may preferably be 0.05 kA/m² to 20 kA/m², further preferably be 4 kA/m² to 20 kA/m², and particularly preferably be 6 kA/m² to 15 kA/m².

In particular, when the fluctuating power supply is used, it is preferable that the upper limit of the current density is the aforementioned range.

In the alkaline water electrolysis method according to the present embodiment, the pressure in the electrolytic cell 65 may preferably be 3 kPa to 1,000 kPa, and further preferably be 3 kPa to 300 kPa.

In the present embodiment, the alkaline water electrolysis system 70 configured as illustrated in FIG. 1, for example, can be produced by using the aforementioned components of the alkaline water electrolysis system 70. However, this is not restrictive.

Further, in the present embodiment, it is preferable that flow of electrolyte in the outlet hose is stopped by stopping the feed pump 71 when power supply to the electrolyzer 50 is stopped. When flow of the electrolyte in the outlet hose is stopped, the electrolyte flows out to the outlet header due to its own weight, and an insulating gas layer is formed in the outlet hose, which infinitely increases the liquid resistance of the outlet hose, and almost no leak current flows into the outlet hose. As a result an influence of self-discharging can be reduced.

In the alkaline water electrolysis method according to the present embodiment, the aforementioned effect is noticeable when a fluctuating power supply such as photovoltaic power and wind power is used.

### (Hydrogen production method)

The hydrogen production method according to the present embodiment includes performing electrolysis of water containing alkali by an electrolyzer to produce hydrogen, and may be conducted by using the water electrolysis system according to the present embodiment and the method thereof.

In the present embodiment, the system may have a hydrogen gas line and an oxygen gas line, each connected to the electrolyzer.

Further, in the system, a gas concentration meter, a pressure gauge and a pressure control valve may be provided to at least one of the hydrogen gas line and the oxygen gas line.

In the present embodiment, a difference in pressure between the hydrogen gas line and the oxygen gas line during stop of electrolysis may be adjusted by obtaining pressure data from the pressure gauge of the hydrogen gas line and the pressure gauge of the oxygen gas line and by controlling the pressure control valve based on such pressure data.

Details of the water electrolysis system and the water electrolysis method according to the present embodiment are as described above.

The following provides a description of a second embodiment to achieve the second object of the present disclosure.

The second embodiment may be combined with the aforementioned first embodiment or the third embodiment described below in an appropriate manner.

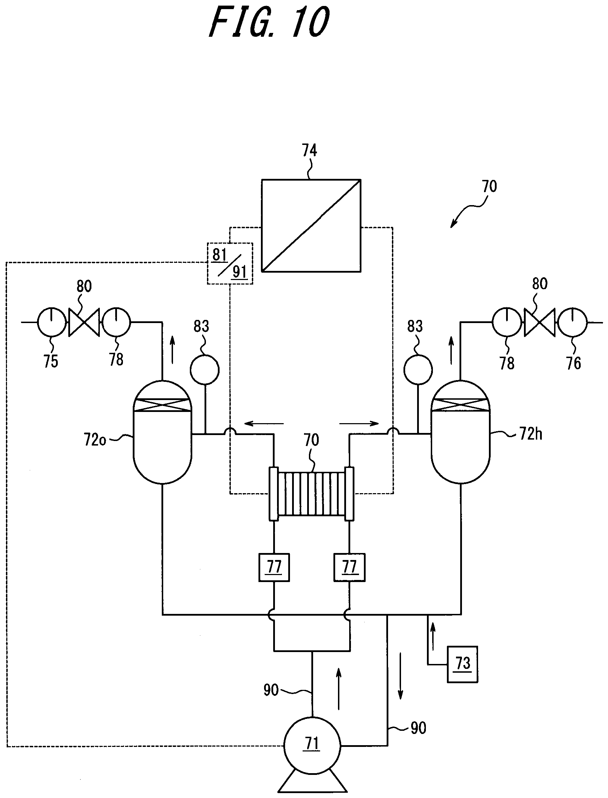

FIG. 10 schematically illustrates the alkaline water electrolysis system according to the present embodiment.

### (Alkaline water electrolysis system)

The alkaline water electrolysis system 70 according to the present embodiment includes an electrolyzer 50 having an electrode compartment 5 and a controller 91 that controls the circulation flow rate of the electrolyte depending on the current density applied to the electrode compartment 5.

The alkaline water electrolysis system 70 according to the present embodiment further includes a junction pipe 90 connected to a hydrogen separation tank 72h that separates the electrolyte from the hydrogen gas and an oxygen separation tank 72o that separates the electrolyte from the oxygen gas.

The controller 91 may preferably be selected at least from an automatic control valve (not illustrated) attached to liquid distribution pipes 20i (20ai, 20ci) that distribute electrolyte to the electrode compartment 5 and an inverter (not illustrated) attached to the feed pump that circulates the electrolyte.

Further, it is preferable that the electrolyzer 50 and the header 10, which is a pipe that distributes and collects the electrolyte, are unified, the header 10 is provided at the lower part of the partition wall 1 of the electrolyzer 50 and/or the outer frame 3 of the electrolyzer 50, and is provided such that it extends in the direction perpendicular to the partition wall 1.

It is further preferable that the membrane 4 that separates anode compartment 5a from the cathode compartment 5c in the electrode compartment 5 may contain polysulfone.

The alkaline water electrolysis system 70 according to the present embodiment has an electrolyzer 50, a feed pump 71 that circulates the electrolyte, gas-liquid separation tanks 72 (a hydrogen separation tank 72h, an oxygen separation tank 72o) that separate electrolyte from hydrogen and/or oxygen and a water replenisher 73 that replenishes water consumed by electrolysis, as illustrated in FIG. 10, for example.

### (Alkaline water electrolysis method)

The alkaline water electrolysis method according to the present embodiment can be conducted by using the alkaline water electrolysis system 70 according to the present embodiment.

In the alkaline water electrolysis method according to the present embodiment, the circulation flow rate of electrolyte is controlled depending on the current density applied to the electrode compartment 5, and in this case the electrolyte discharged from the hydrogen separation tank 72h and the electrolyte discharged from the oxygen separation tank 72o are mixed in the junction pipe 90 and are introduced into the electrode compartment 5.

In the present embodiment, it is preferable that the circulation flow rate is decreased as the current density is decreased. Further, it is preferable that the circulation flow rate is increased as the current density is increased.

The ratio of circulation flow rate to the current density is preferably 1 × 10⁶ m⁵/C to 1 × 10⁹ m⁵/C.

Further, in the present embodiment, it is preferable that flow of electrolyte in the outlet hose is stopped by stopping the feed pump 71 when power supply to the electrolyzer 50 is stopped. When flow of the electrolyte in the outlet hose is stopped, the electrolyte flows out to the outlet header due to its own weight, and an insulating gas layer is formed in the outlet hose, which infinitely increases the liquid resistance of the outlet hose, and almost no leak current flows into the outlet hose. As a result an influence of a self-discharging can be reduced.

In the alkaline water electrolysis method according to the present embodiment, the aforementioned effect is noticeable when a fluctuating power supply such as photovoltaic power and wind power is used.

The following provides a description of a third embodiment to achieve the third object of the present disclosure. The third embodiment may be combined with the aforementioned first embodiment or the second embodiment in an appropriate manner.

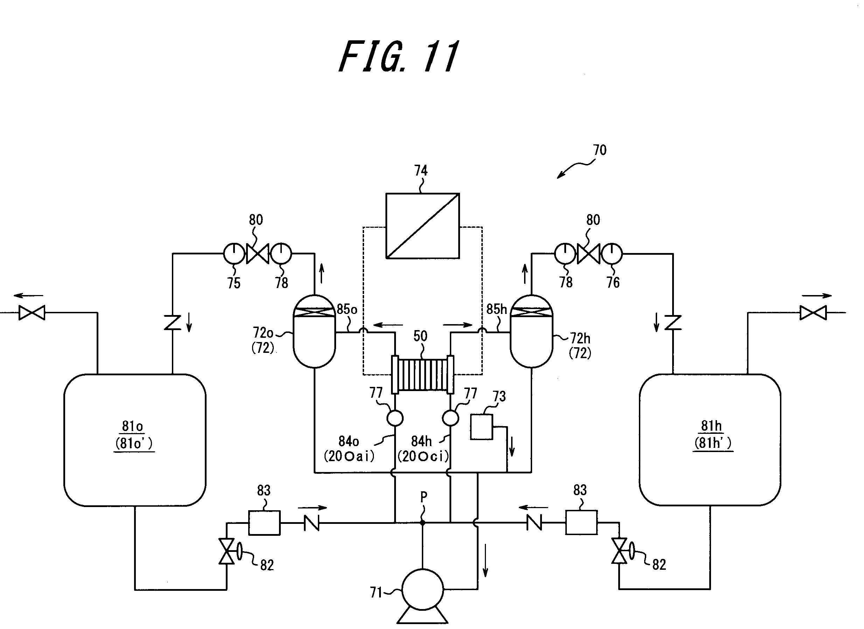

FIG. 11 schematically illustrates the alkaline water electrolysis system according to the present embodiment.

### (Alkaline water electrolysis system)

A first aspect of the alkaline water electrolysis system 70 according to the present embodiment includes an electrolyzer 50 having a cathode compartment 5c; and a hydrogen tank 81h' that is connected, by the hydrogen introduction pipe 84h, to the cathode compartment 5c at the upstream side in the electrolyte passing direction D1 and stores hydrogen gas to be introduced into the cathode compartment 5c.

In the first aspect, it is preferable that the alkaline water electrolysis system 70 further includes a liquid distribution pipe (20Oci) that distributes electrolyte to the cathode compartment 5c, and the liquid distribution pipe (20Oci) serves as the hydrogen introduction pipe 84h.

It is also preferable that the alkaline water electrolysis system 70 further includes a hydrogen tank 81h that is connected, by the hydrogen drawing pipe 85h, to the cathode compartment 5c at the downstream side in the electrolyte passing direction D1 and stores hydrogen gas generated in the cathode compartment 5c, and the hydrogen tank 81h serves as the hydrogen tank 81h' that stores hydrogen gas to be introduced into the cathode compartment 5c.

In this context, it is preferable that the hydrogen introduction pipe 84h has a control valve (not illustrated).

In a second aspect, the alkaline water electrolysis system 70 according to the present embodiment includes an electrolyzer having an anode compartment 5a and an oxygen tank 81o' that is connected, by the oxygen introduction pipe 84o, to the anode compartment 5a at the upstream side in the electrolyte passing direction D1 and stores oxygen gas to be introduced into the anode compartment 5a.

In the second aspect, it is preferable that the alkaline water electrolysis system 70 further includes a liquid distribution pipe (20Oai) that distributes electrolyte to the anode compartment 5a, and the liquid distribution pipe (20Oai) serves as the oxygen introduction pipe 84o.

It is also preferable that the alkaline water electrolysis system 70 further includes an oxygen tank 81o that is connected, by the oxygen drawing pipe 85o, to the anode compartment 5a at the downstream side in the electrolyte passing direction D1 and stores oxygen gas generated in the anode compartment 5a, and the oxygen tank 81o serves as an oxygen tank 81o' that stores oxygen gas to be introduced into the anode compartment 5a.

In this context, it is preferable that the oxygen introduction pipe 84o has a control valve (not illustrated).

In the present embodiment, as illustrated in FIG. 11, it is preferable that the alkaline water electrolysis system 70 has both of the aforementioned first aspect and the second aspect together.

The alkaline water electrolysis system according to the present embodiment includes, for example, an electrolyzer 50, a feed pump 71 that circulates electrolyte, a gas-liquid separation tank 72 that separates electrolyte from hydrogen and/or oxygen and a water replenisher 73 that replenishes water consumed by electrolysis, as illustrated in FIG. 11.

### (Alkaline water electrolysis method)

The alkaline water electrolysis method according to the present embodiment can be conducted by using the alkaline water electrolysis system 70 according to the present embodiment.

In the first aspect of the alkaline water electrolysis method according to the present embodiment, by using the alkaline water electrolysis system 70 according to the present embodiment, hydrogen gas is introduced to the cathode compartment 5c through the hydrogen introduction pipe 84h when the electrolysis is stopped.

Further, in the first aspect, it is preferable that a decline in the current is automatically detected when the electrolysis is stopped, and introduction of hydrogen gas is started after the decline in the current. For the automatic detection, a non-contact current sensor such as a hall element type or a shunt resistor may be used.

Furthermore, in the first aspect, hydrogen gas may preferably be introduced at a rate of 0.000001 to 1 m³/m²/hour, more preferably be introduced at a rate of 0.0001 to 0.5 m³/m²/hour.

In the second aspect of the alkaline water electrolysis method according to the present embodiment, by using the alkaline water electrolysis system 70 according to the present embodiment, oxygen gas is introduced to the anode compartment 5a through the oxygen introduction pipe 84o when the electrolysis is stopped.

Further, in the second aspect, it is preferable that a decline in the current is automatically detected when the electrolysis is stopped, and introduction of oxygen gas is started after the decline in current. For the automatic detection, a non-contact current sensor such as a hall element sensor or a shunt resistor may be used.

Furthermore, in the second aspect, oxygen gas may preferably be introduced at a rate of 0.000001 to 1 m³/m²/hour, more preferably be introduced at a rate of 0.0001 to 0.5 m³/m²/hour.

The alkaline water electrolysis system 70 according to the present embodiment may have both of the aforementioned first aspect and the second aspect together.

The water electrolysis system, the water electrolysis method and the hydrogen production method according to the embodiment of the present disclosure have been described above with reference to the accompanying drawings.

### EXAMPLES

The following describes the present disclosure in more detail through examples.

Example A and Comparative example A will be described below.

A bipolar element and an electrolysis device for alkaline water electrolysis using the bipolar element were produced as described below.

### - Partition wall, Outer frame -

An element including a partition wall partitioning an anode and a cathode and an outer frame bordering the partition wall was used as a bipolar element. Those members in contact with electrolyte such as the partition wall and the frame of the bipolar element were all made of nickel.

### - Anode -

A nickel expanded metal substrate that had been subjected to blasting in advance was used, and the nickel oxide granulated product was sprayed onto both sides of a conductive substrate by plasma spraying to produce an anode.

### - Cathode -

A plain weave mesh substrate obtained by knitting fine wires of nickel having a diameter of 0.15 mm with a mesh opening of 420 µm (40 mesh) and carried thereon platinum was used as a conductive substrate.

### - Membrane -

Zirconium oxide (product name: EP Zirconium Oxide; produced by Daiichi Kigenso Kagaku Kogyo Co., Ltd.) and N-methyl-2-pyrrolidone (produced by Wako Pure Chemical Industries, Ltd.) were loaded into a ball mill pot containing SUS (stainless steel) balls of 0.5 mm in diameter. These materials were stirred together at a rotation speed of 70 rpm for three hours and dispersed to obtain a mixture. The resulting mixture was filtered through a stainless steel mesh (mesh count: 595 µm (30 mesh)) to separate the balls from the mixture. Polysulfone (Udel^{®} (Udel is a registered trademark in Japan, other countries, or both) produced by Solvay Advanced Polymers) and polyvinylpyrrolidone (produced by Wako Pure Chemical Industries, Ltd.; weight-average molecular weight (Mw): 900,000) were added to the mixture from which the balls had been separated, and were stirred therewith for 12 hours using a three-one motor to cause dissolution and obtain a coating liquid having the following composition.
Polysulfone: 15 parts by mass
Polyvinylpyrrolidone: 6 parts by mass
N-Methyl-2-pyrrolidone: 70 parts by mass
Zirconium oxide: 45 parts by mass

The coating liquid was applied to both sides of a polyphenylene sulfide mesh (produced by Clever Co., Ltd.; thickness: 280 µm; mesh opening: 358 µm; fiber diameter: 150 µm) serving as a substrate using a comma coater to obtain a coating thickness of 150 µm at each side. Immediately after the coating, the substrate coated with the coating liquid was exposed to vapor from a coagulation bath holding a pure water/isopropanol mixture (produced by Wako Pure Chemical Industries, Ltd.; pure water/isopropanol = 50/50 (v/v)) at 30°C. Immediately thereafter, the substrate coated with the coating liquid was immersed in the coagulation bath. A coating film was formed on the surface of the substrate through coagulation of polysulfone. Thereafter, the coating film was thoroughly rinsed with pure water to obtain a porous membrane. This porous membrane was referred to as membrane A.

The cathode A was adjusted to 50 cm square (50 cm by 50 cm) through cutting process to obtain a cathode sample A.

The anode A was adjusted to 50 cm square (50 cm by 50 cm) through cutting process to obtain an anode sample A.

The membrane A was adjusted to 52 cm square (52 cm by 52 cm) through cutting process to obtain a membrane sample A.

### - Zero-gap structure -

Bipolar elements were stacked through a gasket that holds a membrane to assemble a bipolar electrolyzer, and the cathode sample A and the anode sample A were pressed from both sides of the membrane so that they contact each other to form a zero-gap structure.

Only the anode sample A was used on the anode side, and the cathode sample A composed of a combination of "cathode/conductive elastic body/collector" was used on the cathode side.

The aforementioned anode sample was used. As a collector, a nickel expanded metal substrate that had been subjected to blasting in advance was used. The substrate had a thickness of 1 mm and an open fraction of 54%.

### - Bipolar electrolyzer. bipolar element -

Nine bipolar elements were used. As illustrated in FIG. 5, on one end side, a fast head, an insulating plate and an anode terminal unit were arranged, and in addition thereto, nine sets of an anode side gasket part, a membrane, a cathode side gasket part and a bipolar element disposed in this order were arranged. Furthermore, an anode side gasket part, a membrane and a cathode side gasket part were arranged. On the other end side, a cathode terminal unit, an insulating plate and a loose head were arranged. Thereafter, they were stacked from both of the fast head side and the loose head side with a gasket seal surface pressure of 2,450 kN/m² to assemble a bipolar electrolyzer.

In Example A, the cathode compartment and the anode compartment had 10 compartments, respectively, which constituted a series connection of 10 pairs.

### - Gasket -

The gasket was made of EPDM rubber and had a tensile stress at 100% deformation of 4.0 MPa and a thickness of 4.0 mm.

### - Header, Conduit -

The internal header 10I type bipolar element 60 was adopted.

As illustrated in FIGS. 6 and 8, the headers 10 (the anode inlet header 10Iai, the cathode inlet header 10Ici, the anode outlet header 10Iao and the cathode outlet header 10Ico) were each arranged to be in parallel with the two sides of the partition wall 1 of the bipolar element 60 (arranged so as to extend orthogonal to the upper side and the lower side of the partition wall 1).

Further, as illustrated in FIGS. 6 and 8, all of the conduits 20 (the liquid distribution pipe for anode 20Iai, the liquid distribution pipe for cathode 20Ici, the liquid collection pipe for anode 20Iao and the liquid collection pipe for cathode 20Ico) were arranged such that they extend in the direction vertical to the partition wall 1 of the bipolar element 60.

In this manner, the internal header 10I type electrolyzer was produced.

The electrolyte was flowed to the cathode compartment 5c through the cathode inlet header 10Ici, and from the cathode compartment 5c through the cathode outlet header 10Ico. Further, the electrolyte was flowed to the anode compartment 5a through the anode inlet header 10Iai, and from the anode compartment 5a through the anode outlet header 10Ico.

As illustrated in FIG. 5, the cathode electrolyte inlet 5ci is connected to one end on the lower side of the outer frame 3 having a rectangular shape in a plan view, and the cathode electrolyte outlet 5co is connected to the top of the side which is continuous with the other end on the lower side of the outer frame 3 having a rectangular shape in a plan view. The cathode electrolyte inlet 5ci and the cathode electrolyte outlet 5co were arranged, in the electrolysis compartment 5 having a rectangular shape in a plan view, such that they are opposed to each other across the center of the electrode compartment 5. The electrolyte flowed from down to up with an inclination relative to the vertical direction, and rose along the electrode surface.

In the bipolar electrolyzer 50 according to Example A, the electrolyte flowed into the anode compartment 5a and the cathode compartment 5c from the electrolyte inlet 5i of the anode compartment 5a and the cathode compartment 5c, and the electrolyte and the produced gas flowed from the electrolyte outlet 5o of the anode compartment 5a and the cathode compartment 5c out of the electrolyzer 50.

In the cathode compartment 5c, hydrogen gas is generated through the electrolysis, and in the anode compartment 5a, oxygen gas is generated through the electrolysis. Thus, in the cathode outlet header 10Ico, a mixed phase flow of the electrolyte and the hydrogen gas occurred, and in the anode outlet header 10Ico, a mixed phase flow of the electrolyte and the oxygen gas occurred.

The bipolar electrolyzer was produced in accordance with the following procedures.

The cathode sample A was attached to the cathode surface of the bipolar frame and the anode sample A was attached to the anode surface of the bipolar frame to obtain a bipolar element. Further, the cathode sample A was attached to the cathode terminal frame to obtain a cathode terminal element, and the anode sample A was attached to the anode terminal frame to obtain an anode terminal element.

The area of the electrode (anode and cathode) attached to the bipolar element was adjusted to 0.25 m², the thickness of the bipolar element was adjusted to 0.033 m, and the thicknesses of the cathode terminal element and the anode terminal element were each adjusted to 0.0125 m.

Nine of the aforementioned bipolar elements were prepared. Further, the aforementioned cathode terminal element and the anode terminal element were prepared one for each.

A gasket was attached to metal frames of all of the bipolar elements, the cathode terminal element and the anode terminal element.

A piece of membrane sample A was interposed between the anode terminal element and the cathode side of the bipolar element. Nine bipolar elements were arranged in series such that one anode side and the other cathode side of adjacent bipolar elements are opposed to each other, and each of eight pieces of membrane samples A is interposed between adjacent bipolar elements. Furthermore, a piece of membrane sample A was interposed between the anode side of the ninth bipolar element and the cathode terminal element, which was tightened by a press machine, and the fast head, the insulating plate and the loose head were used. In this manner, an internal header type bipolar electrolyzer was obtained.

The alkaline water electrolysis device as illustrated in FIG. 1 was produced by using a feed pump, a gas-liquid separation tank, a water replenisher or the like, all of which have been commonly used in the art.

Hydrogen and oxygen separated by the gas-liquid separation tank 72 is discharged to the seal pot 92 through the mist separator 90, therebetween a pressure gauge (PI), a thermometer (TI) and a pressure control valve PV were provided.

As a hydrogen concentration meter in oxygen gas (H₂I) and an oxygen concentration meter in hydrogen gas (O₂I), an SD-D58 and SD-1DOX produced by Riken Keiki Co., Ltd. were used respectively. These concentration meters analyzed by sending measurement gas to the concentration meter sensor part by a suction pump (not illustrated). The gas concentration meter was connected between the gas-liquid separation tank 72 and the seal pot 92 in parallel therewith through the valves 80 to 83 and 84 to 87. Further, on the upstream side of H₂I and O₂I was provided with a Vortex cooler 91, which is a gas cooler, to remove mist.

The alkaline water electrolysis method by using an electrolysis device for alkaline water electrolysis was conducted under the following conditions.

The 30% KOH aqueous solution was used as electrolyte.

Circulation of the anode compartment, the oxygen separation tank (a gas-liquid separation tank for anode) and the anode compartment, and circulation of the cathode compartment, the hydrogen separation tank (a gas-liquid separation tank for cathode) and the cathode compartment were conducted by a feed pump.

Note that, as the circulation passages, a 20A SGP carbon steel plumbing system was used with those portions in contact with electrolyte having been subjected to inner surface Teflon^{®} (Teflon is a registered trademark in Japan, other countries, or both) lining.

The gas-liquid separation tank having a height of 1,400 mm and a capacity of 1 m³ was prepared. The volume of liquid in the gas-liquid separation tank was about 50% of the design capacity.

Current was applied from the rectifier to the bipolar electrolyzer such that the areas of 0.1 kA/m² and 10kA/m² are obtained with respect to the cathode and the anode, respectively. In Example A1, the electrode has an area of 500 mm × 500 mm. Thus 25A was applied for 0.1 kA/m² and 2,500A was applied for 10kA/m² from the rectifier to the bipolar electrolyzer.

### (Example A1)

Pressures of the cathode side and anode side in the electrolyzer were measured by the pressure gauges PI1 and PI2, respectively, and current was applied until the device was stabilized at 8 kA/m² while the cathode compartment side (hydrogen side) was adjusted to 50kPa and the anode compartment side (oxygen side) was adjusted to 49 kPa. When stabilized, the pressures thereof were adjusted by the pressure control valves PV1 and PV2 disposed on the downstream of the pressure gauge. H₂I measured gas concentration with the valves 80 and 82 open and valves 81 and 83 closed, and O₂I measured gas concentration with the valves 84 and 86 open and valves 85 and 87 closed. They were arranged as schematically illustrated in FIG. 2.

After the device was stabilized, the current was gradually reduced to 0A, and passing of current was stopped.

After passing of current was stopped, valves 80, 82, 84 and 86 were closed, and then were opened for 30 seconds at intervals of 15 minutes to allow the gas to pass through H₂I and O₂I. This operation was conducted for 60 minutes. At this time, the pressure regulating valve was set such that 50 kPa was automatically maintained on the cathode compartment side and a pressure lower than that of the cathode compartment side by 1 kPa was automatically maintained on the anode compartment side.

After 60 minutes, the pressure on the cathode compartment side was 35 kPa, the inner pressure of the anode compartment side was 34 kPa and the liquid temperature in the gas-liquid separation tank on the cathode compartment side after holding was 80 °C.

### (Comparative example A1)

In the same manner as Example A1, passing of current was conducted until the device was stabilized with the current value of 2,000A.

After the device was stabilized, the current was gradually reduced to 0A, and passing of current was stopped.

After passing of current was stopped, the gas was passed through H₂I and O₂I while valves 80, 82, 84 and 86 were opened. This operation was conducted for 60 minutes. At this time, the pressure regulating valve was set such that 50 kPa was automatically maintained on the cathode compartment side and a pressure lower than that of the cathode compartment side by 1 kPa was automatically maintained on the anode compartment side.

After 60 minutes, the pressure on the cathode compartment side was 2 kPa, the inner pressure on the anode compartment side was 1 kPa and the liquid temperature in the gas-liquid separation tank on the cathode compartment side after holding was 81 °C. At this time, opening of the pressure regulating valve was 0% for both on the cathode compartment side and the anode compartment side.

Thereafter, this state was maintained for further 30 minutes, and the resulting liquid temperature in the gas-liquid separation tank on the cathode compartment side was 75 °C and the resulting inner pressure on the anode compartment side was -1 kPa.

### (Example A2)

The bipolar electrolyzer and the alkaline water electrolysis system were produced in the same manner as Example A1 with the exception of the header structure, which was changed to an external header type.

### - Header, Conduit -

As illustrated in FIGS. 7 and 9, conduits 20 (a liquid distribution pipe for anode 20Oai, a liquid distribution pipe for cathode 20Oci, a liquid collection pipe for anode 20Oao and a liquid collection pipe for cathode 20Oco) that distribute and collect the electrolyte were provided to the outside of the housing of the bipolar electrolyzer 50 according to Example A2. Further, as headers 10 that allow the electrolyte to pass from the conduits 20 to the electrode compartment 5, hoses (an anode inlet header 10Oai, a cathode inlet header 10Oci, an anode outlet header 10Oao and a cathode outlet header 10Oco) were attached to the outside of the electrolyzer 50.

In this context, as illustrated in FIG. 4, the headers 10 (the anode inlet header 10Oai, the cathode inlet header 10Oci, the anode outlet header 10Oao and the cathode outlet header 10Oco) were all arranged so as to extend to the outside from the side of the partition wall 1 of the bipolar element 60. Further, as illustrated in FIGS. 7 and 9, the conduits 20 (the liquid distribution pipe for anode 20Oai, the liquid distribution pipe for cathode 20Oci, the liquid collection pipe for anode 20Oao and the liquid collection pipe for cathode 20Oco) were all arranged so as to extend in the direction perpendicular to the partition wall 1 of the bipolar element 60.

In this manner the external header 10O type electrolyzer 50 was produced.

The electrolyte was flowed to the cathode compartment 5c through the cathode inlet header 10Oci, and from the cathode compartment 5c through the cathode outlet header 10Oco. Further, the electrolyte was flowed to the anode compartment 5a through the anode inlet header 10Oai, and from the anode compartment 5a through the anode outlet header 10Oco.

As illustrated in FIGS. 7 and 9, the inlet hose is connected to one end on the lower side of the outer frame 3 having a rectangular shape in a plan view, and the outlet hose is connected to the upper portion of the side which is continuous with the other end on the lower side of the outer frame 3 having a rectangular shape in a plan view. The inlet hose and the outlet hose were arranged, in the electrolysis compartment 5 having a rectangular shape in a plan view, such that they are opposed to each other across the center of the electrode compartment 5. The electrolyte flowed from down to up with an inclination relative to the vertical direction, and rose along the electrode surface.

In the bipolar electrolyzer 50 according to Example A2, the electrolyte flowed into the anode compartment 5a and the cathode compartment 5c from the inlet hoses of the anode compartment 5a and the cathode compartment 5c, respectively, and the electrolyte and the produced gas flowed from the outlet hoses of the anode compartment 5a and the cathode compartment 5c out of the electrolyzer 50.

In the cathode compartment 5c, hydrogen gas is generated through the electrolysis, and in the anode compartment 5a, oxygen gas is generated through the electrolysis. Thus, in the cathode outlet header 10Oco, a mixed phase flow of the electrolyte and the hydrogen gas occurred, and in the anode outlet header 10Oao, a mixed phase flow of the electrolyte and the oxygen gas occurred.

The pressures on the cathode side and the anode side in the electrolyzer were measured by the pressure gauges PI1 and PI2, respectively, and current was passed through the electrolyzer until it was stabilized at 8 kA/m² while the cathode compartment side was adjusted to 50 kPa and the anode compartment side was adjusted to 49 kPa. Pressure was adjusted by using the pressure control valves PV1 and PV2 disposed respectively on the downstream of the pressure gauges. The H₂I measured the gas concentration with the valves 80 and 82 open and the valves 81 and 83 closed, and the O₂I measured the gas concentration with the valves 84 and 86 open and the valves 85 and 87 closed. They were arranged as schematically illustrated in FIG. 2.

After the device was stabilized, the current was gradually reduced to 0A, and passing of current was stopped.

After passing of current was stopped, the valves 80, 82, 84 and 86 were closed, and then were opened for 30 seconds at intervals of 15 minutes to allow the gas to pass through H₂I and O₂I. This operation was conducted for 30 minutes. At this time, the pressure regulating valve was set such that 50 kPa was automatically maintained on the cathode compartment side and a pressure lower than that of the cathode compartment side by 1 kPa was automatically maintained on the anode compartment side.

After 30 minutes, the pressure on the cathode compartment side was 40 kPa, the inner pressure of the anode compartment side was 39 kPa and the liquid temperature in the gas-liquid separation tank on the cathode compartment side after holding was 84 °C.

### (Reference example A1)

A bipolar electrolyzer was produced in the same manner as Example A2.

The pressures on the cathode side and the anode side in the electrolyzer were measured by the pressure gauges PI1 and PI2, respectively, and current was passed through the electrolyzer until it was stabilized at 8 kA/m² while the cathode compartment side was adjusted to 50 kPa and the anode compartment side was adjusted to 49 kPa. Pressure was adjusted by using the pressure control valves PV1 and PV2 disposed respectively on the downstream of the pressure gauges. The H₂I measured the gas concentration with the valves 80 and 82 open and the valves 81 and 83 closed, and the O₂I measured the gas concentration with the valves 84 and 86 open and the valves 85 and 87 closed.

After the device was stabilized, the current was gradually reduced to 0A, and passing of current was stopped.

After passing of current was stopped, the valves 80, 82, 84 and 86 were remained open to allow the gas to pass through H₂I and O₂I. This operation was conducted for 30 minutes. At this time, the pressure regulating valve was set such that 50 kPa was automatically maintained on the cathode compartment side and a pressure lower than that of the cathode compartment side by 1 kPa was automatically maintained on the anode compartment side.

After 30 minutes, the pressure on the cathode compartment side was 5 kPa, the inner pressure of the anode compartment side was 4 kPa and the liquid temperature in the gas-liquid separation tank on the cathode compartment side after holding was 83 °C. At this time, opening of the pressure regulating valve was 0% for both on the cathode compartment side and the anode compartment side.

### (Example A3)

Passing of current was stopped after stable operation in the same manner as Example A2 with the exception that the cathode compartment side pressure was 30 kPa and the anode compartment side pressure was 29 kPa. The detailed conditions are illustrated in Table 1. After 30 minutes, the pressure on the cathode compartment side was 18 kPa, the pressure on the anode compartment side was 17 kPa and the liquid temperature in the gas-liquid separation tank on the cathode compartment side was 83 °C.

### (Comparative example A2)

Stable passing of current and stop of passing of current were conducted in the same manner as Example A3 with the exception that the valves 80, 82, 84 and 86 of the line for the gas concentration meter were normally open after stop of passing of current. The detailed conditions are illustrated in Table 1. After 30 minutes, the inner pressures were 0 kPa for both on the cathode compartment side and the anode compartment side, and the liquid temperature in the cathode compartment side gas-liquid separation tank was 84 °C.

### (Example A4)

By using the same bipolar electrolyzer as that of Example A1, stable passing of current and stop of passing of current were conducted in the same manner as Example A1 with the exception that: the valves 80 and 83 for the gas concentration meter on the anode compartment side were open and the valves 81 and 82 therefore were closed; the valves 84 and 87 for the gas concentration meter on the cathode compartment side were open and the valves 85 and 86 therefore were closed; and the aforementioned valve state was maintained even after passing of current was stopped. The detailed conditions are illustrated in Table 1. The aforementioned elements were arranged as schematically illustrated in FIG. 3. After 60 minutes, the pressure on the cathode compartment side was 43 kPa, the pressure on the anode compartment side was 42 kPa and the liquid temperature in the gas-liquid separation tank on the cathode compartment side was 79 °C.

### (Example A5)

Stable passing of current and stop of passing of current were conducted in the same manner as Example A4 with the exception that the pressure on the cathode compartment side and the pressure on the anode compartment side during stable passing of current were 30 kPa and 29 kPa, respectively. The detailed conditions are illustrated in Table 1. After 60 minutes, the pressure on the cathode compartment side was 20 kPa, the pressure on the anode compartment side was 19 kPa and the liquid temperature in the gas-liquid separation tank on the cathode compartment side was 80 °C.

### (Example A6)

Stable passing of current and stop of passing of current were conducted in the same manner as Example A4 with the exception that the pressure on the cathode compartment side and the pressure on the anode compartment side during stable passing of current were 30 kPa and 29 kPa, respectively. The detailed conditions are illustrated in Table 1. After 30 minutes, the pressure on the cathode compartment side was 24 kPa, the pressure on the anode compartment side was 23 kPa and the liquid temperature in the gas-liquid separation tank on the cathode compartment side was 82 °C.

### (Example A7)

By using the same bipolar electrolyzer as that of Example A2, stable passing of current and stop of passing of current were conducted in the same manner as Example A1 with the exception that: the valves 81 and 82 for the gas concentration meter on the anode compartment side were open and the valves 80 and 83 therefore were closed, the valves 85 and 86 for the gas concentration meter on the cathode compartment side were open and the valves 84 and 87 therefore were closed; the aforementioned valve state was maintained after passing of current was stopped; and an operation in which the pressure control valve was open for 30 seconds at intervals of 15 minutes was added. The aforementioned elements were arranged as schematically illustrated in FIG. 4. After 60 minutes, the pressure on the cathode compartment side was 35 kPa, the pressure on the anode compartment side was 34 kPa and the liquid temperature in the gas-liquid separation tank on the cathode compartment side was 83 °C.

### (Example A8)

Stable passing of current and stop of passing of current were conducted in the same manner as Example A7 with the exception that the holding period was 30 minutes. The detailed conditions are illustrated in Table 1. After 30 minutes, the pressure on the cathode compartment side was 44 kPa, the pressure on the anode compartment side was 43 kPa and the liquid temperature in the gas-liquid separation tank on the cathode compartment side was 85 °C.

### (Example A9)

Stable passing of current and stop of passing of current were conducted in the same manner as Example A7 with the exception that the pressure on the cathode compartment side was 30 kPa and the pressure on the anode compartment side was 29 kPa during stable passing of current. The detailed conditions are illustrated in Table 1. After 30 minutes, the pressure on the cathode compartment side was 18 kPa, the pressure on the anode compartment side was 17 kPa and the liquid temperature in the gas-liquid separation tank on the cathode compartment side was 84 °C.

### (Example A10)

The same bipolar electrolyzer as that of Example A1 was used under the conditions illustrated in Table 1, and the electrolyzer was evaluated in the same manner as that for Reference examples B and C described below.

### (Example A11)

The same bipolar electrolyzer as that of Example A1 was used under the conditions illustrated in Table 1, and the electrolyzer was evaluated in the same manner as that for Reference examples B and C described below.

**[Table 1]**

| | Alkaline water electrolysis system | | | | Before holding | | | Valve operation | After holding | | |
|---|---|---|---|---|---|---|---|---|---|---|---|
| | Header | Configuration | Temperature during current passing | Differenti al pressure | Internal pressure on cathode compartment side | Internal pressure on anode compartment side | Holding period | - | Internal pressure on cathode compartment side | Internal pressure on anode compartment side | Temperature after holding |
| Example A1 | Internal | FIG.2 | 90 °C | 1kPa | 50kPa | 49kPa | 60min | Valve open for 30s every 15min | 35kPa | 34kPa | 80°C |
| Comparative example A1 | Internal | FIG.2 | 90 °C | 1kPa | 50kPa | 49kPa | 60min | | 2kPa | IkPa | 81 °C |
| Example A2 | External | FIG.2 | 90 °C | 1kPa | 50kPa | 49kPa | 30min | Valve open for 30s every 15min | 40kPa | 39kPa | 84 °C |
| Reference example A1 | External | FIG.2 | 90 °C | 1kPa | 50kPa | 49kPa | 30min | | 5kPa | 4kPa | 83 °C |
| Example A3 | Extemal | FIG.2 | 90 °C | 1kPa | 30kPa | 29kpPa | 30min | Valve open for 30s every 15min | 18kPa | 17kPa | 83 °C |
| Comparative example A2 | External | FIG.2 | 90 °C | 1kPa | 30kPa | 29kpPa | 30min | | 0kPa | 0kPa | 84 °C |
| Example A4 | Internal | FIG.3 | 90 °C | 1kPa | 50kPa | 49kPa | 60min | | 43kPa | 42kPa | 79 °C |
| Example A5 | Internal | FIG.3 | 90 °C | 1kPa | 30kPa | 29kPa | 60min | | 20kPa | 19kPa | 80 °C |
| Example A6 | Internal | FIG.3 | 90 °C | 1kPa | 30kPa | 29kpPa | 30min | | 24kPa | 23kPa | 82 °C |
| Example A7 | External | FIG.4 | 90 °C | 1kPa | 50kPa | 49kPa | 60min | Valve open for 30s every 15min | 35kPa | 34kPa | 83 °C |
| Example A8 | External | FIG.4 | 90 °C | 1kPa | 50kPa | 49kPa | 30min | Valve open for 30s every 15min | 44kPa | 43kPa | 85 °C |
| Example A9 | External | FIG.4 | 90 °C | 1kPa | 30kPa | 29kPa | 30min | Valve open for 30s every ISmin | 18kPa | 17kPa | 84 °C |

| Header | Configuration | Temperature during current passing | Differential pressure | Internal pressure on cathode compartment side | Internal pressure on anode compartment side | Holding period | - | Internal pressure on cathode compartment side | Internal pressure on anode compartment side | Temperature after holding | |
|---|---|---|---|---|---|---|---|---|---|---|---|
| Example A10 | Internal | FIG.2 | 90 °C | 1kPa | 50kPa | 49kPa | 60min | Valve open for 30s every 15min | 35kPa | 34kPa | 80°C |
| Example A11 | Internal | FIG.2 | 90 °C | 1kPa | 50kPa | 49kPa | 60min | Valve open for 30s every 15min | 35kPa | 34kPa | 80°C |

| | With or without inverter | Current density | Flow rate | Header configuration | Temperature on electrolyzer outlet side | H₂/O₂ after 100 hours with 0.1 kA/m² | H2/O2 after 100 hours with 10 kA/m² |
|---|---|---|---|---|---|---|---|
| | - | kA/m² | L/min | Internal/External | °C | % | % |
| Example A10 | with | 0.1 | 0.7 | Internal | 84°C | 0.51 | 0.24 |
| Example A11 | without | 0 | 0 | Internal | 80°C | - | - |

| | Electrolysis system | | Current passing-Hydrogen generation | | Stopping-Hydrogen introduction | | Hydrogen introduction ratio | Electrolysis test | | | |
|---|---|---|---|---|---|---|---|---|---|---|---|
| | Control valve for introduction pipe | Electrode area | Hydrogen producing canability | Total hydrogen producing amount (Energization for 12Hr) | Hydrogen introduction amount | Total hydrogen instroduction amount (Stop for 12Hr) | | Cell voltage | | | |
| | | | | | | | | Initial | SD100 times | SD1,000 times | SD2,000 |
| | w/wo | m² | m³/m²/Hr | m³/m² | m³/m²/Hr | m³/m² | % | V | V | V | V |
| Example A10 | without | 0.25 | 2.51 | 30.12 | 0 | 0 | 0 | 1.79 | 1.85 | 1.9 | 2.2 |
| Example A11 | with | 0.25 | 2.51 | 30.12 | 0.000001 | 0.000012 | 3.98406E-05 | 1.81 | 1.8 | 1.82 | 1.84 |

### Reference example B will be described below.

### (Reference example B1)

A bipolar element and an alkaline water electrolysis system using the bipolar element were produced as follows.

### - Partition wall, Outer frame -

As a bipolar element, one having a partition wall partitioning the anode and the cathode and an outer frame surrounding the partition wall was used. Those members in contact with the electrolyte, such as the partition wall and the frame of the bipolar element, were all made of nickel.

### - Anode -

As the anode, a nickel-expanded metal substrate that had been subjected to blasting in advance was used, and granulated products of nickel oxide were sprayed onto both surfaces of a conductive substrate by a plasma spraying method to produce the anode.

### - Cathode -

A plain weave mesh substrate obtained by knitting fine wires of nickel having a diameter of 0.15 mm with a mesh opening of 420 µm (40 mesh) and carried thereon platinum was used as a conductive substrate.

### - Membrane -

Zirconium oxide (product name: EP Zirconium Oxide; produced by Daiichi Kigenso Kagaku Kogyo Co., Ltd.) and N-methyl-2-pyrrolidone (produced by Wako Pure Chemical Industries, Ltd.) were loaded into a ball mill pot containing SUS (stainless steel) balls of 0.5 mm in diameter. These materials were stirred together at a rotation speed of 70 rpm for three hours and dispersed to obtain a mixture. The resulting mixture was filtered through a stainless steel mesh (mesh count: 595 µm (30 mesh)) to separate the balls from the mixture. Polysulfone (Udel^{®} (Udel is a registered trademark in Japan, other countries, or both) produced by Solvay Advanced Polymers) and polyvinylpyrrolidone (produced by Wako Pure Chemical Industries, Ltd.; weight-average molecular weight (Mw): 900,000) were added to the mixture from which the balls had been separated, and were stirred therewith for 12 hours using a three-one motor to cause dissolution and obtain a coating liquid having the following composition.
Polysulfone: 15 parts by mass
Polyvinylpyrrolidone: 6 parts by mass
N-Methyl-2-pyrrolidone: 70 parts by mass
Zirconium oxide: 45 parts by mass

The coating liquid was applied to both sides of a polyphenylene sulfide mesh (produced by Clever Co., Ltd.; thickness: 280 µm; mesh opening: 358 µm; fiber diameter: 150 µm) serving as a substrate using a comma coater to obtain a coating thickness of 150 µm at each side. Immediately after the coating, the substrate coated with the coating liquid was exposed to vapor from a coagulation bath holding a pure water/isopropanol mixture (produced by Wako Pure Chemical Industries, Ltd.; pure water/isopropanol = 50/50 (v/v)) at 30°C. Immediately thereafter, the substrate coated with the coating liquid was immersed in the coagulation bath. A coating film was formed on the surface of the substrate through coagulation of polysulfone. Thereafter, the coating film was thoroughly rinsed with pure water to obtain a porous membrane. This porous membrane was referred to as membrane A.

The cathode A was adjusted to 50 cm square (50 cm by 50 cm) through cutting process to obtain a cathode sample A.

The anode A was adjusted to 50 cm square (50 cm by 50 cm) through cutting process to obtain an anode sample A.

The membrane A was adjusted to 52 cm square (52 cm by 52 cm) through cutting process to obtain a membrane sample A.

### - Zero-gap structure -

Bipolar elements were stacked through a gasket that holds a membrane to assemble a bipolar electrolyzer, and the cathode sample A and the anode sample A were pressed from both sides of the membrane so that they contact each other to form a zero-gap structure.

Only anode sample A was used on the anode side, and the cathode sample A composed of a combination of "cathode/conductive elastic body/collector" was used on the cathode side.

The aforementioned anode sample was used. As a collector, a nickel expanded metal substrate that had been subjected to blasting in advance was used. The substrate had a thickness of 1 mm and an open fraction of 54%. The aforementioned cathode sample was use. As the conductive elastic body, four pieces of woven metal fabric of nickel wires having a wire diameter of 0.15 mm were corrugated so as to have a corrugation height of 5 mm.

### - Bipolar electrolyzer, Bipolar element -

Nine bipolar elements were used. As illustrated in FIG. 10, on one end side, a fast head, an insulating plate and an anode terminal unit were arranged, and in addition thereto, nine sets of an anode side gasket part, a membrane, a cathode side gasket part and a bipolar element disposed in this order were arranged. Furthermore, an anode side gasket part, a membrane and a cathode side gasket part were arranged. On the other end side, a cathode terminal unit, an insulating plate and a loose head were arranged. Thereafter, they were stacked from both of the fast head side and the loose head side with a gasket seal surface pressure of 2,450 kN/m² to assemble a bipolar electrolyzer.

In Reference example B, the cathode compartment and the anode compartment had 10 compartments, respectively, which constituted a series connection of 10 pairs.

### - Gasket -

The gasket was made of EPDM rubber and had a tensile stress at 100% deformation of 4.0 MPa and a thickness of 4.0 mm.

### - Header, Conduit -

The internal header 10I type bipolar element 60 was adopted.

As illustrated in FIGS. 6 and 8, the headers 10 (the anode inlet header 10Iai, the cathode inlet header 10Ici, the anode outlet header 10Iao and the cathode outlet header 10Ico) were each arranged to be in parallel with the two sides of the partition wall 1 of the bipolar element 60 (arranged so as to extend orthogonal to the upper side and the lower side of the partition wall 1).

Further, as illustrated in FIGS. 6 and 8, all of the conduits 20 (the liquid distribution pipe for anode 20Iai, the liquid distribution pipe for cathode 20Ici, the liquid collection pipe for anode 20Iao and the liquid collection pipe for cathode 20Ico) were arranged such that they extend in the direction vertical to the partition wall 1 of the bipolar element 60.

In this manner, the internal header 10I type electrolyzer was produced.

The electrolyte was flowed to the cathode compartment 5c through the cathode inlet header 10Ici, and from the cathode compartment 5c through the cathode outlet header 10Ico. Further, the electrolyte was flowed to the anode compartment 5a through the anode inlet header 10Iai, and from the anode compartment 5a through the anode outlet header 10Ico.

As illustrated in FIG. 7, the cathode electrolyte inlet 5ci is connected to one end on the lower side of the outer frame 3 having a rectangular shape in a plan view, and the cathode electrolyte outlet 5co is connected to the upper portion of the side which is continuous with the other end on the lower portion of the outer frame 3 having a rectangular shape in a plan view. The cathode electrolyte inlet 5ci and the cathode electrolyte outlet 5co were arranged, in the electrolysis compartment 5 having a rectangular shape in a plan view, such that they are opposed to each other across the center of the electrode compartment 5. The electrolyte flowed from down to up with an inclination relative to the vertical direction, and rose along the electrode surface.

In the bipolar electrolyzer 50 according to Reference example B, the electrolyte flowed into the anode compartment 5a and the cathode compartment 5c from the electrolyte inlet 5i of the anode compartment 5a and the cathode compartment 5c, and the electrolyte and the produced gas flowed from the electrolyte outlet 5o of the anode compartment 5a and the cathode compartment 5c out of the electrolyzer 50.

In the cathode compartment 5c, hydrogen gas is generated through the electrolysis, and in the anode compartment 5a, oxygen gas is generated through the electrolysis. Thus, in the cathode outlet header 10Ico, a mixed phase flow of the electrolyte and the hydrogen gas occurred, and in the anode outlet header 10Ico, a mixed phase flow of the electrolyte and the oxygen gas occurred.

The bipolar electrolyzer according to Reference example B1 was produced in accordance with the following procedures.

The cathode sample A was attached to the cathode surface of the bipolar frame and the anode sample A was attached to the anode surface of the bipolar frame to obtain a bipolar element. Further, the cathode sample A was attached to the cathode terminal frame to obtain a cathode terminal element, and the anode sample A was attached to the anode terminal frame to obtain an anode terminal element.

The area of the electrode (anode and cathode) attached to the bipolar element was adjusted to 0.25 m², the thickness of the bipolar element was adjusted to 0.033 m, and the thicknesses of the cathode terminal element and the anode terminal element were adjusted to 0.0125 m.

As an electrolyte supply header structure of the bipolar electrolyzer, an internal header type was used.

Nine pieces of the aforementioned bipolar elements were prepared. Further, the aforementioned cathode terminal element and the anode terminal element were prepared one for each.

A gasket was attached to metal frames of all of the bipolar element, the cathode terminal element and the anode terminal element.

A piece of membrane sample A was interposed between the anode terminal element and the cathode side of the bipolar element. Nine bipolar elements were arranged in series such that one anode side and the other cathode side of adjacent bipolar elements are opposed to each other, and each of eight pieces of membrane samples A is interposed between adjacent bipolar elements. Furthermore, a piece of membrane sample A was interposed between the anode side of the ninth bipolar element and the cathode terminal element, which was tightened by a press machine, and the fast head, the insulating plate and the loose head were used. In this manner, an internal header type bipolar electrolyzer was obtained.

The alkaline water electrolysis system as illustrated in FIG. 10 was produced by using a feed pump, a gas-liquid separation tank, a water replenisher or the like, all of which have been commonly used in the art.

The alkaline water electrolysis method by using an alkaline water electrolysis system was conducted under the following conditions

The 30% KOH aqueous solution was used as electrolyte.

Circulation of the anode compartment, the oxygen separation tank (a gas-liquid separation tank for anode) and the anode compartment, and circulation of the cathode compartment, the hydrogen separation tank (a gas-liquid separation tank for cathode) and the cathode compartment were conducted by a feed pump. The temperature of the electrolyte was adjusted to 90 C.

Note that, as the circulation passages, a 20A SGP carbon steel plumbing system was used with those portions in contact with electrolyte having been subjected to inner surface Teflon^{®} (Teflon is a registered trademark in Japan, other countries, or both) lining.

The gas-liquid separation tank having a height of 1,400 mm and a capacity of 1 m³ was prepared. The volume of liquid in the gas-liquid separation tank was about 50% of the design capacity.

Current was applied from the rectifier to the bipolar electrolyzer such that the areas of 0.1 kA/m² and 10kA/m² are obtained with respect to the cathode and the anode, respectively. In Reference example B1, the electrode has an area of 500 mm × 500 mm. Thus 25A was applied to 0.1 kA/m² and 2,500A was applied to 10kA/m² from the rectifier to the bipolar electrolyzer.

The pressure in the electrolyzer was measured by a pressure gauge, and the electrolysis was conducted by adjusting so that the cathode compartment side pressure was 50 kPa and the anode compartment side pressure was 49 kPa. The pressure adjustment was conducted by a pressure control valve installed downstream of each pressure gauge.

### (Automatic flow control on the inlet side of the electrolyzer)

An inverter was attached to the feed pump and the current value was measured by an ammeter 81. On the basis of the measurement results, the frequencies were adjusted by the inverter to be 0.7 L/min and 7 L/min when the flow rates were 0.1 kA/m² and 10 kA/m², respectively.

### (Reference example B2)

The bipolar electrolyzer and the alkaline water electrolysis system were produced in the same manner as Reference example B1 with the exception that an external header type was adopted.

### - Header, Conduit -

The external header 10O type bipolar element 60 was adopted.

As illustrated in FIGS. 7 and 9, conduits 20 (a liquid distribution pipe for anode 20Oai, a liquid distribution pipe for cathode 20Oci, a liquid collection pipe for anode 20Oao and a liquid collection pipe for cathode 20Oco) that distribute and collect electrolyte were provided to the outside of the housing of the bipolar electrolyzer 50 according to Reference example B. Furthermore, as headers 10 that allow the electrolyte to pass through the conduits 20 to the electrode compartment 5, hoses (an anode inlet header 10Oai, a cathode inlet header 10Oci, an anode outlet header 10Oao and a cathode outlet header 10Oco) were attached to the outside of the electrolyzer 50.

In this context, as illustrated in FIG. 7, the headers 10 (the anode inlet header 10Oai, the cathode inlet header 10Oci, the anode outlet header 10Oao and the cathode outlet header 10Oco) were all arranged such that they extend to the outside from the side of the partition wall 1 of the bipolar element 60. Further, as illustrated in FIG. 7, the conduits 20 (the liquid distribution pipe for anode 20Oai, the liquid distribution pipe for cathode 20Oci, the liquid collection pipe for anode 20Oao and the liquid collection pipe for cathode 20Oco) were all arranged such that they extend in the direction perpendicular to the partition wall 1 of the bipolar element 60.

In this manner, the external header 10O type electrolyzer 50 was produced.

The electrolyte was flowed to the cathode compartment 5c through the cathode inlet header 10Oci, and from the cathode compartment 5c through the cathode outlet header 10Oco. Further, the electrolyte was flowed to the anode compartment 5a through the anode inlet header 10Oai, and from the anode compartment 5a through the anode outlet header 10Oco.

As illustrated in FIG. 7, the inlet hose is connected to one end at the bottom of the outer frame 3 of a rectangular shape in a plan view, and the outlet hose is connected to the upper portion of the side which is continuous with the other end at the bottom of the outer frame 3 of a rectangular shape in a plan view. The inlet hose and the outlet hose were arranged, in the electrolysis compartment 5 having a rectangular shape in a plan view, such that they are opposed to each other across the center of the electrode compartment 5. The electrolyte flowed from down to up with an inclination relative to the vertical direction, and rose along the electrode surface.

In the bipolar electrolyzer 50 according to Reference example B, the electrolyte flowed into the anode compartment 5a and the cathode compartment 5c from the inlet hoses of the anode compartment 5a and the cathode compartment 5c, respectively, and the electrolyte and the produced gas flowed from the outlet hoses of the anode compartment 5a and the cathode compartment 5c out of the electrolyzer 50.

In the cathode compartment 5c, hydrogen gas is generated through electrolysis, and in the anode compartment 5a, oxygen gas is generated through electrolysis. Thus, in the cathode outlet header 10Oco, a mixed phase flow of the electrolyte and the hydrogen gas occurred, and in the anode outlet header 10Oao, a mixed phase flow of the electrolyte and the oxygen gas occurred.

### (Reference example B3)

The bipolar electrolyzer was produced in the same manner as Reference example B1. The alkaline water electrolysis system was produced in the same manner as Reference example B1 with the exception that automatic flow control was not conducted on the electrolyzer inlet side.

An inverter was attached to the feed pump and frequency was adjusted so as to obtain a flow rate of 7 L/min.

### (Reference example B4)

The bipolar electrolyzer was produced in the same manner as Reference example B1. The alkaline water electrolysis system was produced in the same manner as Reference example B1 with the exception that automatic flow control was not conducted on the electrolyzer inlet side.

An inverter was attached to the feed pump and frequency was adjusted so as to obtain a flow rate of 0.7 L/min.

### (Reference example B5)

The bipolar electrolyzer was produced in the same manner as Reference example B2. The alkaline water electrolysis system was produced in the same manner as Reference example B2 with the exception that automatic flow control was not conducted on the electrolyzer inlet side.

An inverter was attached to the feed pump and frequency was adjusted so as to obtain a flow rate of 7 L/min.

### (Reference example B5)

The bipolar electrolyzer was produced in the same manner as Reference example B2. The alkaline water electrolysis system was produced in the same manner as Reference example B2 with the exception that automatic flow control was not conducted on the electrolyzer inlet side.

An inverter was attached to the feed pump and frequency was adjusted so as to obtain a flow rate of 0.7 L/min.

The alkaline water electrolysis of Reference example B was evaluated as follows.

### (Measurement of gas purity)

Passing of current was started with the current density of 0.1 kA/m². After100 hours, the hydrogen concentration in the resulting oxygen (H₂/O₂) was measured and the purity (%) of oxygen was calculated. Further, in 100 hours after passing of current was started with the current density of 10 kA/m², the hydrogen concentration (H₂/O₂) in the resulting oxygen was measured and the purity (%) of oxygen was calculated.

### (Temperature measurement on electrolyzer outlet side)

The temperatures on the electrolyzer outlet sides on the anode side and the cathode side were measured with a thermometer 83 to calculate the arithmetic mean value of the temperature (°C) on the electrolyzer outlet side.

Table 2 shows the results of evaluation of Reference example B.

**[Table 2]**

| | with/without inverter | Current density | Flow rate | Header configuration | Temperature on electrolyzer outlet side | H₂/O2 after 100 hours with 0.1 kA/m² | H2/O2 after 100 hours with 10 kA/m² |
|---|---|---|---|---|---|---|---|
| | - | kA/m² | L/min | Internal/External | °C | % | % |
| Reference example B1 | with | 0.1 | 0.7 | Internal | 84 | 0.51 | 0.24 |
| | with | 10 | 7 | Internal | 87 | 0.21 | 0.19 |
| Reference example B2 | with | 0.1 | 0.7 | External | 83 | 0.1 | 0.05 |
| | with | 10 | 7 | External | 86 | 0.04 | 0.018 |
| Reference example B3 | wo | 0.1 | 7 | Internal | 76 | 2.6 | 2.1 |
| | wo | 10 | 7 | Internal | 86 | 0.2 | 0.2 |
| Reference example B4 | wo | 0.1 | 0.7 | Internal | 84 | 0.53 | 0.52 |
| | wo | 10 | 0.7 | Internal | 94 | 0.1 | 0.1 |
| Reference example B5 | wo | 0.1 | 7 | External | 74 | 1.12 | 0.58 |
| | wo | 10 | 7 | External | 86 | 0.03 | 0.02 |
| Reference example B6 | wo | 0.1 | 0.7 | External | 82 | 0.09 | 0.04 |
| | wo | 10 | 0.7 | External | 93 | 0.01 | 0 |

In Reference example B1, the electrolyzer outlet side temperatures were 90 °C or less, which was within the allowable range, with both current densities. Further, the gas purities were 1% or less, which was within the allowable range, with both current densities.

In Reference example B2, the electrolyzer outlet side temperatures were 90 °C or less, which was within the allowable range, with both current densities. Further, the gas purities were slightly better than those of Reference example B1 with both current densities.

In Reference example B3, the electrolyzer outlet side temperatures were 90 °C or less, which was within the allowable range, with both current densities. During electrolysis with 0.1 kA/m², the gas purity exceeded the allowable range of 1%.

In Reference example B4, the electrolyzer outlet side temperatures exceeded the allowable range of 90 °C during electrolysis with 10 kA/m². The gas purities were within the allowable range of 1% with both current densities.

In Reference example B5, the electrolyzer outlet side temperatures were 90 °C or less, which was within the allowable range, with both current densities. During electrolysis with 0.1 kA/m², the gas purity exceeded the allowable range of 1%.

In Reference example B6, the electrolyzer outlet side temperatures exceeded the allowable range of 90 °C during electrolysis with 10 kA/m². Further, the gas purities were within the allowable range of 1% with both current densities.

### Reference example C will be described below.

### (Reference example C1)

A bipolar element, an electrolyzer using the bipolar element and an alkaline water electrolysis system using the aforementioned elements were produced as described below.

### - Partition wall, Outer frame -

An element including a partition wall partitioning an anode and a cathode and an outer frame bordering the partition wall was used as a bipolar element. Those members in contact with electrolyte such as the partition wall and the frame of the bipolar element were all made of nickel.

### - Anode -

As the anode, a nickel-expanded metal substrate that had been subjected to blasting in advance was used, and granulated products of nickel oxide were sprayed onto both surfaces of a conductive substrate by a plasma spraying method to produce the anode.

### - Cathode -

A plain weave mesh substrate obtained by knitting fine wires of nickel having a diameter of 0.15 mm with a mesh opening of 420 µm (40 mesh) was used as a conductive substrate. The plain weave mesh substrate was subjected to blasting using alumina powder having a weight-average particle diameter of 100 µm or less, was subsequently acid treated for 5 minutes at room temperature in 6 N hydrochloric acid, and was then rinsed with water and dried.

Next, a palladium nitrate solution (produced by Tanaka Kikinzoku Kogyo K.K.; palladium concentration: 100 g/L) and a dinitrodiammine platinum nitric acid solution (produced by Tanaka Kikinzoku Kogyo K.K.; platinum concentration: 100 g/L) were mixed at a molar ratio of palladium to platinum of 1:1 to prepare a coating liquid 1.

A bat containing the coating liquid 1 was placed at the bottom of the coating roll, the coating liquid 1 was impregnated into an EPDM coating roll, and a roll was placed on the top so that the roll and the coating liquid 1 were always in contact with each other. Further, a PVC roller was placed thereon, and the coating liquid 1 was applied to the conductive substrate (roll method). Before the coating liquid 1 being dried, the conductive substrate was quickly passed between two EPDM sponge rolls to remove by suction the coating liquid accumulating at intersections of the mesh of the conductive substrate. Thereafter, the conductive substrate was dried at 50 °C for 10 minutes to form a coated membrane, which was heated and sintered at 500 °C for 10 minutes with a muffle furnace to thermally decompose the membrane. The cycle of roll application, dry and thermal decomposition was repeated twice to form a layer 1.

Next, an iridium chloride acid solution (from Tanaka Kikinzoku Kogyo K.K., with iridium concentration of 100 g/L) and a dinitrodiammine platinum nitric acid solution (from Tanaka Kikinzoku Kogyo K.K., with platinum concentration of 100 g/L) were mixed at a molar ratio of iridium to platinum of 0.73:0.27 to prepare a coating liquid 2. As with the layer 1, the coating liquid 2 was applied on the substrate on which the layer 1 was formed by a roll method, and after that drying and thermal decomposition were conducted. This cycle was repeated twice at a drying temperature of 50 °C and thermal decomposition temperature of 500 °C to form a layer 2. Furthermore the substrate was heated at 500 °C for an hour in the air atmosphere to produce a cathode A.

### - Membrane -

Zirconium oxide (product name: EP Zirconium Oxide; produced by Daiichi Kigenso Kagaku Kogyo Co., Ltd.) and N-methyl-2-pyrrolidone (produced by Wako Pure Chemical Industries, Ltd.) were loaded into a ball mill pot containing SUS (stainless steel) balls of 0.5 mm in diameter. These materials were stirred together at a rotation speed of 70 rpm for three hours and dispersed to obtain a mixture. The resulting mixture was filtered through a stainless steel mesh (mesh count: 595 µm (30 mesh)) to separate the balls from the mixture. Polysulfone (Udel^{®} (Udel is a registered trademark in Japan, other countries, or both) produced by Solvay Advanced Polymers) and polyvinylpyrrolidone (produced by Wako Pure Chemical Industries, Ltd.; weight-average molecular weight (Mw): 900,000) were added to the mixture from which the balls had been separated, and were stirred therewith for 12 hours using a three-one motor to cause dissolution and obtain a coating liquid having the following composition.
Polysulfone: 15 parts by mass
Polyvinylpyrrolidone: 6 parts by mass
N-Methyl-2-pyrrolidone: 70 parts by mass
Zirconium oxide: 45 parts by mass

The coating liquid was applied to both sides of a polyphenylene sulfide mesh (produced by Clever Co., Ltd.; thickness: 280 µm; mesh opening: 358 µm; fiber diameter: 150 µm) serving as a substrate using a comma coater to obtain a coating thickness of 150 µm at each side. Immediately after the coating, the substrate coated with the coating liquid was exposed to vapor from a coagulation bath holding a pure water/isopropanol mixture (produced by Wako Pure Chemical Industries, Ltd.; pure water/isopropanol = 50/50 (v/v)) at 30°C. Immediately thereafter, the substrate coated with the coating liquid was immersed in the coagulation bath. A coating film was formed on the surface of the substrate through coagulation of polysulfone. Thereafter, the coating film was thoroughly rinsed with pure water to obtain a porous membrane. This porous membrane was referred to as membrane A.

The cathode A was adjusted to 50 cm square (50 cm by 50 cm) through cutting process to obtain a cathode sample A.

The anode A was adjusted to 50 cm square (50 cm by 50 cm) through cutting process to obtain an anode sample A.

The membrane A was adjusted to 52 cm square (52 cm by 52 cm) through cutting process to obtain a membrane sample A.

### - Zero-gap structure -

Bipolar elements were stacked through a gasket that holds a membrane to assemble a bipolar electrolyzer, and the cathode sample A and the anode sample A were pressed from both sides of the membrane so that they contact each other to form a zero-gap structure.

Only anode sample A was used on the anode side, and the cathode sample A composed of a combination of "cathode/conductive elastic body/collector" was used on the cathode side.

The aforementioned anode sample was used. As a collector, a nickel expanded metal substrate that had been subjected to blasting in advance was used. The substrate had a thickness of 1 mm and an open fraction of 54%. The aforementioned cathode sample was use. As the conductive elastic body, four pieces of woven metal fabric of nickel wires having a wire diameter of 0.15 mm were corrugated so as to have a corrugation height of 5 mm.

### - Bipolar electrolyzer, Bipolar element -

Nine bipolar elements were used. As illustrated in FIG. 5, on one end side, a fast head, an insulating plate and an anode terminal unit were arranged, and in addition thereto, nine sets of an anode side gasket part, a membrane, a cathode side gasket part and a bipolar element disposed in this order were arranged. Furthermore, an anode side gasket part, a membrane and a cathode side gasket part were arranged. On the other end side, a cathode terminal unit, an insulating plate and a loose head were arranged. Thereafter, they were stacked from both of the fast head side and the loose head side with a gasket seal surface pressure of 2,450 kN/m² to assemble a bipolar electrolyzer.

In Reference example C, the cathode compartment and the anode compartment had 10 compartments, respectively, which constituted a series connection of 10 pairs.

### - Gasket -

The gasket was made of EPDM rubber and had a tensile stress at 100% deformation of 4.0 MPa and a thickness of 4.0 mm.

### - Header, Conduit -

As illustrated in FIG. 9, conduits 20 (a liquid distribution pipe for anode 20Oai, a liquid distribution pipe for cathode 20Oci, a liquid collection pipe for anode 20Oao and a liquid collection pipe for cathode 20Oco) that distribute and collect electrolyte were provided to the outside of the housing of the bipolar electrolyzer 50 according to Reference example C. Furthermore, as headers 10 that allow the electrolyte to pass through the conduits 20 to the electrode compartment 5, hoses (an anode inlet header 10Oai, a cathode inlet header 10Oci, an anode outlet header 10Oao and a cathode outlet header 10Oco) were attached to the outside of the electrolyzer 50.

In this context, as illustrated in FIG. 9, the headers 10 (the anode inlet header 10Oai, the cathode inlet header 10Oci, the anode outlet header 10Oao and the cathode outlet header 10Oco) were all arranged such that they extend to the outside from the side of the partition wall 1 of the bipolar element 60. Further, as illustrated in FIG. 9, the conduits 20 (the liquid distribution pipe for anode 20Oai, the liquid distribution pipe for cathode 20Oci, the liquid collection pipe for anode 20Oao and the liquid collection pipe for cathode 20Oco) were all arranged such that they extend in the direction perpendicular to the partition wall 1 of the bipolar element 60.

In this manner, the external header 10O type electrolyzer 50 was produced.

The electrolyte was flowed to the cathode compartment 5c through the cathode inlet header 10Oci, and from the cathode compartment 5c through the cathode outlet header 10Oco. Further, the electrolyte was flowed to the anode compartment 5a through the anode inlet header 10Oai, and from the anode compartment 5a through the anode outlet header 10Oco.

As illustrated in FIG. 9, the inlet hose is connected to one end on the lower side of the outer frame 3 having a rectangular shape in a plan view, and the outlet hose is connected to the upper portion on the side which is continuous with the other end on the lower side of the outer frame 3 having a rectangular shape in a plan view. The inlet hose and the outlet hose were arranged, in the electrolysis compartment 5 having a rectangular shape in a plan view, such that they are opposed to each other across the center of the electrode compartment 5. The electrolyte flowed from down to up with an inclination relative to the vertical direction, and rose along the electrode surface.

In the bipolar electrolyzer 50 according to Reference example C, the electrolyte flowed into the anode compartment 5a and the cathode compartment 5c from the inlet hoses of the anode compartment 5a and the cathode compartment 5c, respectively, and the electrolyte and the produced gas flowed from the outlet hoses of the anode compartment 5a and the cathode compartment 5c out of the electrolyzer 50.

In the cathode compartment 5c, hydrogen gas is generated through the electrolysis, and in the anode compartment 5a, oxygen gas is generated through the electrolysis. Thus, in the aforementioned cathode outlet header 10Oco, a mixed phase flow of the electrolyte and the hydrogen gas occurred, and in the anode outlet header 10Oao, a mixed phase flow of the electrolyte and the oxygen gas occurred.

The bipolar electrolyzer according to Reference example C1 was produced in accordance with the following procedures.

A cathode sample A was attached to the cathode surface of the bipolar frame and an anode sample A was attached to the anode surface of the bipolar frame to obtain a bipolar element. Further, a cathode sample A was attached to a cathode terminal frame to obtain a cathode terminal element, and an anode sample A was attached to an anode terminal frame to obtain an anode terminal element.

The area S1 of the electrodes (anode and cathode) attached to the bipolar element was adjusted to 0.25 m², the thickness d of the bipolar element was adjusted to 0.033 m, and the thicknesses of the cathode terminal element and the anode terminal element were adjusted to 0.0125 m.

Nine of the aforementioned bipolar elements were prepared. Further, the aforementioned cathode terminal element and the anode terminal element were prepared one for each.

A gasket was attached to metal frames of all of the bipolar element, the cathode terminal element and the anode terminal element.

A piece of membrane sample A was interposed between the anode terminal element and the cathode side of the bipolar element. Nine bipolar elements were arranged in series such that one anode side and the other cathode side of adjacent bipolar elements are opposed to each other, and each of eight pieces of membrane samples A was interposed between adjacent bipolar elements. Further, a piece of membrane sample A was interposed between the anode side of the ninth bipolar element and the cathode terminal element, which was tightened by a press machine and the fast head, the insulating plate and the loose head were used. In this manner, an external header type bipolar electrolyzer was obtained.

The alkaline water electrolysis system as illustrated in FIG. 11 was produced by using a feed pump, a gas-liquid separation tank, a water replenisher or the like, all of which have been commonly used in the art.

The alkaline water electrolysis method by using an alkaline water electrolysis system was conducted under the following conditions.

The 30% KOH aqueous solution was used as electrolyte.

Circulation of the anode compartment, the oxygen separation tank (a gas-liquid separation tank for anode) and the anode compartment, and circulation of the cathode compartment, the hydrogen separation tank (a gas-liquid separation tank for cathode) and the cathode compartment were conducted by a feed pump. The temperature of the electrolyte was adjusted to 90 C.

Note that, as the circulation passages, a 20A SGP carbon steel plumbing system was used with those portions in contact with electrolyte having been subjected to inner surface Teflon^{®} (Teflon is a registered trademark in Japan, other countries, or both) lining.

The gas-liquid separation tank having a height of 1,400 mm and a capacity of 1 m³ was prepared. The volume of liquid in the gas-liquid separation tank was about 50% of the design capacity.

The pressure in the electrolyzer was measured by a pressure gauge, and electrolysis was conducted by adjusting so as to obtain the cathode compartment side pressure of 50 kPa and the anode compartment side pressure of 49 kPa. The pressure adjustment was conducted by pressure control valves installed downstream of each pressure gauge.

### (Reference example C2)

The alkaline water electrolysis system was produced in the same manner as Reference example C1. The hydrogen gas was introduced from the hydrogen introduction pipe 85 to the cathode side for consecutive 12 hours by adjusting the control valve 83 so as to obtain the flow rate of hydrogen gas of 1 m³/m²/hr.

### (Reference example C3)

The cathode A was adjusted to 1,200 cm × 2,400 cm through cutting process to obtain a cathode sample A.

The anode A was adjusted to 1,200 cm × 2,400 cm through cutting process to obtain an anode sample A.

The membrane A was adjusted to 1,202 cm × 2,402 cm through cutting process to obtain a membrane sample A.

Other than the aforementioned matters, the alkaline water electrolysis system was produced in the same manner as Reference example C1.

### (Reference example C4)

The alkaline water electrolysis system was produced in the same manner as Reference example C4. The hydrogen gas was introduced from the hydrogen introduction pipe 85 to the cathode side for consecutive 12 hours by adjusting the control valve 83 so as to obtain the flow rate of hydrogen gas of 1 m³/m²/hr.

### (Reference example C5)

The alkaline water electrolysis system was produced in the same manner as Reference example C1 and was left for 12 hours without introducing hydrogen from the hydrogen introduction pipe 85 to the cathode side.

### (Reference example C6)

The alkaline water electrolysis system was produced in the same manner as Reference example C1. The hydrogen gas was introduced from the hydrogen introduction pipe 85 to the cathode side for consecutive 12 hours by adjusting the control valve 83 so as to obtain the flow rate of hydrogen gas of 0.0000009 m³/m²/hr.

### (Reference example C7)

The alkaline water electrolysis system was produced in the same manner as Reference example C1. The hydrogen gas was introduced from the hydrogen introduction pipe 85 to the cathode side for consecutive 12 hours by adjusting the control valve 83 so as to obtain the flow rate of hydrogen gas of 1.1 m³/m²/hr.

### (Reference example C8)

The alkaline water electrolysis system was produced in the same manner as Reference example C4 and was left for 12 hours without introducing hydrogen from the hydrogen introduction pipe 85 to the cathode side.

### (Reference example C9)

The alkaline water electrolysis system was produced in the same manner as Reference example C4. The hydrogen gas was introduced from the hydrogen introduction pipe 85 to the cathode side for consecutive 12 hours by adjusting the control valve 83 so as to obtain the flow rate of hydrogen gas of 0.0000009 m³/m²/hr.

### (Reference example C10)

The alkaline water electrolysis system was produced in the same manner as Reference example C4. The hydrogen gas was introduced from the hydrogen introduction pipe 85 to the cathode side for consecutive 12 hours by adjusting the control valve 83 so as to obtain the flow rate of hydrogen gas of 1.1 m³/m²/hr.

The alkaline water electrolysis according to Reference example C was evaluated in the following manner.

### (Electrolysis test 1)

The cell voltages of the electrolytic cells were measured 12 hours after starting of passing of current with the current density of 10 kA/m² to calculate the arithmetic mean values. Thereafter the electrolysis was stopped. The hydrogen gas was introduced from the hydrogen introduction pipe 85 to the cathode side for consecutive 12 hours by adjusting the control valve 83 so as to obtain the flow rate of hydrogen gas of 0.000001 m³/m²/hr. The hydrogen introduction amount was measured with a gas flow meter 84. The aforementioned series of operation of passing of current and stop of electrolysis was defined as an SD operation, and the SD operation was repeated 2,000 times in total. Table 3 shows results of the electrolysis test 1 with respect to Reference example C.

**[Table 3]**

| | Electrolysis system | | Current passing•Hydrogen generation | | Stopping•Hydrogen introduction | | Hydrogen introduction ratio | Electrolysis test | | | |
|---|---|---|---|---|---|---|---|---|---|---|---|
| | Control valve for introduction pipe | Electrode area | Hydrogen producing capability | Total hydrogen generation amount (Current passing for 12Hr) | Hydrogen introduction amount | Total hydrogen generation amount (Suspension for 12Hr) | | Cell voltage | | | |
| | | | | | | | | Initial | SD100 times | SD1,000 times | SD2,000 times |
| | w/wo | m² | m³/m²/Hr | m3/m2 | m³/m²/Hr | m3/m2 | % | V | V | V | V |
| Reference example C1 | with | 0.25 | 2.51 | 30.12 | 0.000001 | 0.000012 | 0.00004 | 1.81 | 1.8 | 1.82 | 1.84 |
| Reference example C2 | with | 0.25 | 2.51 | 30.12 | 1 | 12 | 39.84064 | 1.79 | 1.79 | 1.81 | 1.8 |
| Reference example C3 | with | 2.7 | 2.51 | 30.12 | 0.000001 | 0.000012 | 0.00004 | 1.81 | 1.81 | 1.82 | 1.85 |
| Reference example C4 | with | 2.7 | 2.51 | 30.12 | 1 | 12 | 39.84064 | 1.8 | 1.79 | 1.81 | 1.8 |
| Reference example C5 | wo | 0.25 | 2.51 | 30.12 | 0 | 0 | 0.00000 | 1.79 | 1.85 | 1.9 | 2.2 |
| Reference example C6 | with | 0.25 | 2.51 | 30.12 | 0.0000009 | 0.0000108 | 0.00004 | 1.81 | 1.8 | 1.92 | 2 |
| Reference example C7 | with | 0.25 | 2.51 | 30.12 | 1.1 | 13.2 | 43.82470 | 1.79 | 1.78 | 1.81 | 1.79 |
| Reference example C8 | wo | 2.7 | 2.51 | 30.12 | 0 | 0 | 0.00000 | 1.79 | 1.85 | 1.9 | 2.2 |
| Reference example C9 | with | 2.7 | 2.51 | 30.12 | 0.0000009 | 0.0000108 | 0.00004 | 1.81 | 1.8 | 1.92 | 2 |
| Reference example | with | 2.7 | 2.51 | 30.12 | 1.1 | 13.2 | 43.82470 | 1.79 | 1.79 | 1.81 | 1.8 |

With respect to Reference examples C1 and C3, the cell voltage was increased only dozens of mV, which was within the allowable range, even if the number of SD operations increases. Total hydrogen introduction amount was almost 0%, and the utilization factor of hydrogen generated through the electrolysis was relatively low.

The durability to the SD operation of Reference examples C2 and C4 was higher than that of Reference examples C1 and C3. The total hydrogen introduction amount was 39.8%, and it was not necessary for hydrogen generated through the electrolysis to be excessively used.

With respect to Reference examples C5, C6, C8 and C9, the cell voltage increased as the number of SD operations increases, and exceeded 2V when the number of SD operations reached 2,000 times.

With respect to Reference examples C7 and C10, the cell voltage was increased only dozens of mV, which was within the allowable range, even if the number of SD operations increases. Total hydrogen introduction amount was 40% or more and the utilization factor of the hydrogen generated through the electrolysis was relatively high.

### INDUSTRIAL APPLICABILITY

According to the present disclosure, when the water electrolysis is conducted under an environment of fluctuating power supply such as photovoltaic power and wind power, pressure leakage when the operation is stopped, a decrease in gas pressure due to a decrease in the electrolyte temperature, and an increase in a differential pressure between the anode compartment side and the cathode compartment side can be prevented.

### REFERENCE SIGNS LIST

- 1: partition wall
- 2: electrode
- 2a: anode
- 2c: cathode
- 2e: conductive elastic body
- 2r: current collector
- 3: outer frame
- 4: membrane
- 5: electrode compartment
- 5a: anode compartment
- 5c: cathode compartment
- 5i: electrolyte inlet
- 5o: electrolyte outlet
- 5ai: anode electrolyte inlet
- 5ao: anode electrolyte outlet
- 5ci: cathode electrolyte inlet
- 5co: cathode electrolyte outlet
- 6: distributor (rib)
- 6a: anode distributor (anode rib)
- 6c: cathode distributor (cathode rib)
- 7: gasket
- 10: header
- 10ai: anode inlet header
- 10ao: anode outlet header
- 10ci: cathode inlet header
- 10co: cathode outlet header
- 10I: internal header
- 10Iai: anode inlet header
- 10Iao: anode outlet header
- 10Ici: cathode inlet header
- 10Ico: cathode outlet header
- 10O: external header
- 10Oai: anode inlet header (anode inlet side hose)
- 10Oao: anode outlet header (anode outlet side hose)
- 10Oci: cathode inlet header (cathode inlet side hose)
- 10Oco: cathode outlet header (cathode outlet side hose)
- 20: conduit
- 20ai: liquid distribution pipe for anode
- 20ao: liquid collection pipe for anode
- 20ci: liquid distribution pipe for cathode
- 20co: liquid collection pipe for cathode
- 20Iai: liquid distribution pipe for anode
- 20Iao: liquid collection pipe for anode
- 20Ici: liquid distribution pipe for cathode
- 20Ico: liquid collection pipe for cathode
- 20Oai: liquid distribution pipe for anode
- 20Oao: liquid collection pipe for anode
- 20Oci: liquid distribution pipe for cathode
- 20Oco: liquid collection pipe for cathode
- 50: bipolar electrolyzer
- 51g: fast head, loose head
- 51i: insulating plate
- 51a: anode terminal element
- 51c: cathode terminal element
- 51r: tie rod
- 60: bipolar element
- 65: electrolytic cell
- 70: alkaline water electrolysis system
- 71: feed pump
- 72: gas-liquid separation tank
- 72h: hydrogen separation tank
- 72o: oxygen separation tank
- 73: water replenisher
- 74: rectifier
- 75: oxygen concentration meter
- 76: hydrogen concentration meter
- 77: flow meter
- 80: pressure control valve (valve)
- 81: pressure control valve (valve)
- 82: pressure control valve (valve)
- 83: pressure control valve (valve)
- 84: pressure control valve (valve)
- 85: pressure control valve (valve)
- 86: pressure control valve (valve)
- 87: pressure control valve (valve)
- 90: mist separator
- 91: gas cooler
- 92: seal pot
- 100h: hydrogen gas line
- 100o: oxygen gas line
- D1: given direction along partition wall (electrolyte passing direction)
- H₂I: concentration meter for hydrogen in oxygen gas (oxygen concentration meter)
- O₂I: concentration meter for oxygen in hydrogen gas (hydrogen concentration meter)
- PI: pressure gauge
- PI1: pressure gauge
- PI2: pressure gauge
- TI: thermometer
- PV: pressure control valve
- PV1: pressure control valve
- PV2: pressure control valve
- Z: zero-gap structure

## Claims

1. An alkaline water electrolysis system (70) comprising a hydrogen gas line (100h) and an oxygen gas line (100o), each connected to an electrolyzer (50), wherein
at least one of the hydrogen gas line (100h) and the oxygen gas line (100ο) is provided with a gas concentration meter (O₂I, H₂I), a pressure gauge (PI) and a pressure control valve (PV), **characterized in that** the system (70) further comprises:
an electrode compartment (5) included in the electrolyzer (50);
a controller (91) configured to control the circulation flow rate of electrolyte depending on the current density applied to the electrode compartment (5); and
a junction pipe (90) connected to a hydrogen separation tank (72h) configured to separate the electrolyte from hydrogen gas and an oxygen separation tank (72o) configured to separate the electrolyte from oxygen gas.

2. The alkaline water electrolysis system (70) according to claim 1, further comprising a mechanism configured to automatically adjust the opening of the pressure control valve (PV).

3. The alkaline water electrolysis system (70) according to claim 1, wherein the gas concentration meter (O₂I, H₂I) is arranged in parallel with the pressure control valve (PV), and the line for the gas concentration meter (O₂I, H₂I) is provided with a mechanism capable of controlling pressure and/or flow rate.

4. The alkaline water electrolysis system (70) according to claim 1, wherein the gas concentration meter (O₂I, H₂I) is arranged on an upstream side of the pressure control valve (PV).

5. The alkaline water electrolysis system (70) according to claim 1, wherein the gas concentration meter (O₂I, H₂I) is arranged on the downstream side of the pressure control valve (PV).

6. The alkaline water electrolysis system (70) according to any one of claims 1 to 5 operating under a fluctuating power supply.

7. A hydrogen production method comprising, producing hydrogen through electrolysis of water containing alkali by using a system (70) including an electrolyzer (50), wherein:
the system (70) includes a hydrogen gas line (100h) and an oxygen gas line (100o), each connected to the electrolyzer (50);
the hydrogen gas line (100h) and the oxygen gas line (100ο) is provided with a gas concentration meter (O₂I, H₂I), a pressure gauge (PI) and a pressure control valve (PV);
an electrode compartment (5) is included in the electrolyzer (50);
a controller (91) configured to control the circulation flow rate of electrolyte depending on the current density applied to the electrode compartment (5); and
a junction pipe (90) is connected to a hydrogen separation tank (72h) configured to separate the electrolyte from hydrogen gas and an oxygen separation tank (72o) configured to separate the electrolyte from oxygen gas;
wherein the pressure control valve (PV) is controlled based on pressure data of the pressure gauge (PI) of the hydrogen gas line (100h) and the pressure gauge (PI) of the oxygen gas line (100o); and
the difference in pressure between the hydrogen gas line (100h) and the oxygen gas line (100ο) is adjusted.

8. The method according to claim 7, further comprising:
controlling, by using the alkaline water electrolysis system (70) according to claim 1, the circulation flow rate of the electrolyte depending on a current density applied to the electrode compartment (5); and
mixing the electrolyte discharged from the hydrogen separation tank (72h) and the electrolyte discharged from the oxygen separation tank (72o) by the junction pipe (90) and introducing a mixture into the electrode compartment (5).

9. The alkaline water electrolysis system (70) according to claim 1, further comprising:
a cathode compartment (5) included in an electrolyzer (50); and
a hydrogen tank (81h) that is connected to the cathode compartment (5) by a hydrogen introduction pipe (84h) on an upstream side in the electrolyte passing direction and configured to store hydrogen gas to be introduced into the cathode compartment (5).

10. The method according to claim 7, further comprising introducing hydrogen gas to the cathode compartment (5) through the hydrogen introduction pipe (84h) when electrolysis is stopped, by using the alkaline water electrolysis system (70) according to claim 9.

11. The alkaline water electrolysis system (70) according to claim 1, comprising:
an electrolyzer (50) including an anode compartment (5a); and
an oxygen tank (81o) that is connected to the anode compartment (5a) by an oxygen introduction pipe (84o) on the upstream side in the electrolyte passing direction and configured to store oxygen gas to be introduced into the anode compartment (5a).

12. The method according to claim 7, further comprising, when electrolysis is stopped, introducing oxygen gas into the anode compartment (5a) through the oxygen introduction pipe (84o), by using the alkaline water electrolysis system (70) according to claim 11.

13. The method according to claim 10 or 12, wherein a fluctuating power supply is used.

## Patentansprüche

1. Alkalisches Wasserelektrolysesystem (70), umfassend eine Wasserstoffgasleitung (100h) und eine Sauerstoffgasleitung (100o), die jeweils an einen Elektrolyseur (50) angeschlossen sind, wobei
die Wasserstoffgasleitung (100h) und/oder die Sauerstoffgasleitung (100ο) mit einem Gaskonzentrationsmessgerät (O₂I, H₂I), einem Manometer (PI) und einem Druckregelventil (PV) versehen ist, **dadurch gekennzeichnet, dass** das System (70) weiterhin umfasst:
ein Elektrodenkompartiment (5), das in dem Elektrolyseur (50) enthalten ist;
ein Steuerungsgerät (91), das so konfiguriert ist, dass es die Zirkulationsfließgeschwindigkeit des Elektrolyten in Abhängigkeit von der an das Elektrodenkompartiment (5) angelegten Stromdichte steuern kann; und
ein Verbindungsrohr (90), das an einen Wasserstofftrenntank (72h), der so konfiguriert ist, dass er den Elektrolyten von Wasserstoffgas trennen kann, und einen Sauerstofftrenntank (72o), der so konfiguriert ist, dass er den Elektrolyten von Sauerstoffgas trennen kann, angeschlossen ist.

2. Alkalisches Wasserelektrolysesystem (70) gemäß Anspruch 1, weiterhin umfassend einen Mechanismus, der so konfiguriert ist, dass er die Öffnung des Druckregelventils (PV) automatisch einstellt.

3. Alkalisches Wasserelektrolysesystem (70) gemäß Anspruch 1, wobei das Gaskonzentrationsmessgerät (O₂I, H₂I) parallel zu dem Druckregelventil (PV) geschaltet ist und die Leitung für das Gaskonzentrationsmessgerät (O₂I, H₂I) mit einem Mechanismus versehen ist, der den Druck und/oder die Fließgeschwindigkeit steuern kann.

4. Alkalisches Wasserelektrolysesystem (70) gemäß Anspruch 1, wobei das Gaskonzentrationsmessgerät (O₂I, H₂I) dem Druckregelventil (PV) vorgeschaltet ist.

5. Alkalisches Wasserelektrolysesystem (70) gemäß Anspruch 1, wobei das Gaskonzentrationsmessgerät (O₂I, H₂I) dem Druckregelventil (PV) nachgeschaltet ist.

6. Alkalisches Wasserelektrolysesystem (70) gemäß einem der Ansprüche 1 bis 5, das mit einer fluktuierenden Stromquelle arbeitet.

7. Wasserstoffproduktionsverfahren, umfassend das Produzieren von Wasserstoff durch Elektrolyse von Alkali enthaltendem Wasser durch Verwendung eines Systems (70), das einen Elektrolyseur (50) umfasst, wobei:
das System (70) eine Wasserstoffgasleitung (100h) und eine Sauerstoffgasleitung (100ο) umfasst, die jeweils an den Elektrolyseur (50) angeschlossen sind;
die Wasserstoffgasleitung (100h) und die Sauerstoffgasleitung (100ο) mit einem Gaskonzentrationsmessgerät (O₂I, H₂I), einem Manometer (PI) und einem Druckregelventil (PV) versehen sind;
ein Elektrodenkompartiment (5) in dem Elektrolyseur (50) enthalten ist;
ein Steuerungsgerät (91), das so konfiguriert ist, dass es die Zirkulationsfließgeschwindigkeit des Elektrolyten in Abhängigkeit von der an das Elektrodenkompartiment (5) angelegten Stromdichte steuern kann; und
ein Verbindungsrohr (90), das an einen Wasserstofftrenntank (72h), der so konfiguriert ist, dass er den Elektrolyten von Wasserstoffgas trennen kann, und einen Sauerstofftrenntank (72o), der so konfiguriert ist, dass er den Elektrolyten von Sauerstoffgas trennen kann, angeschlossen ist;
wobei das Druckregelventil (PV) auf der Basis von Druckdaten von dem Manometer (PI) der Wasserstoffgasleitung (100h) und dem Manometer (PI) der Sauerstoffgasleitung (100ο) gesteuert wird; und
die Druckdifferenz zwischen der Wasserstoffgasleitung (100h) und der Sauerstoffgasleitung (100ο) eingestellt wird.

8. Verfahren gemäß Anspruch 7, weiterhin umfassend:
das Steuern der Zirkulationsfließgeschwindigkeit des Elektrolyten in Abhängigkeit von einer an das Elektrodenkompartiment (5) angelegten Stromdichte durch Verwendung des alkalischen Wasserelektrolysesystems (70) gemäß Anspruch 1; und
das Mischen des aus dem Wasserstofftrenntank (72h) ausgeleiteten Elektrolyten und des aus dem Sauerstofftrenntank (72o) ausgeleiteten Elektrolyten durch das Verbindungsrohr (90) und das Einleiten eines Gemischs in das Elektrodenkompartiment (5).

9. Alkalisches Wasserelektrolysesystem (70) gemäß Anspruch 1, weiterhin umfassend:
ein Kathodenkompartiment (5), das in einem Elektrolyseur (50) enthalten ist; und
einen Wasserstofftank (81h), der über ein Wasserstoffeinleitungsrohr (84h) an das Kathodenkompartiment (5) angeschlossen und diesem in Bezug auf die Elektrolytfließrichtung vorgeschaltet ist und so konfiguriert ist, dass er Wasserstoffgas, das in das Kathodenkompartiment (5) eingeleitet werden soll, speichern kann.

10. Verfahren gemäß Anspruch 7, weiterhin umfassend das Einleiten von Wasserstoffgas über das Wasserstoffeinleitungsrohr (84h) in das Kathodenkompartiment (5), wenn die Elektrolyse unterbrochen wird, indem man das alkalische Wasserelektrolysesystem (70) gemäß Anspruch 9 verwendet.

11. Alkalisches Wasserelektrolysesystem (70) gemäß Anspruch 1, umfassend:
einen Elektrolyseur (50), der ein Anodenkompartiment (5a) enthält; und
einen Sauerstofftank (81o), der über ein Sauerstoffeinleitungsrohr (84o) an das Anodenkompartiment (5a) angeschlossen und diesem in Bezug auf die Elektrolytfließrichtung vorgeschaltet ist und so konfiguriert ist, dass er Sauerstoffgas, das in das Anodenkompartiment (5a) eingeleitet werden soll, speichern kann.

12. Verfahren gemäß Anspruch 7, weiterhin umfassend, wenn die Elektrolyse unterbrochen ist, das Einleiten von Sauerstoffgas über das Sauerstoffeinleitungsrohr (84o) in das Anodenkompartiment (5a) durch Verwendung des alkalischen Wasserelektrolysesystems (70) gemäß Anspruch 11.

13. Verfahren gemäß Anspruch 10 oder 12, wobei eine fluktuierende Stromquelle verwendet wird.

## Revendications

1. Système d'électrolyse d'eau alcaline (70) comprenant une ligne de gaz d'hydrogène (100h) et une ligne de gaz d'oxygène (100o), chacune raccordée à un électrolyseur (50), dans lequel
au moins une de la ligne de gaz d'hydrogène (100h) et la ligne de gaz d'oxygène (100ο) est munie d'un dispositif de mesure de concentration de gaz (O₂I, H₂I), d'une gauge de pression (PI) et d'une vanne de régulation de pression (PV), **caractérisé en ce que** le système (70) comprend de plus :
un compartiment d'électrode (5) inclus dans l'électrolyseur (50) ;
un régulateur (91) configuré pour réguler le débit de circulation d'électrolyte selon la densité de courant appliquée au compartiment d'électrode (5) ; et
un tuyau de jonction (90) raccordé à un récipient de séparation d'hydrogène (72h) configuré pour séparer l'électrolyte du gaz d'hydrogène et un récipient de séparation d'oxygène (72o) configuré pour séparer l'électrolyte du gaz d'oxygène.

2. Système d'électrolyse d'eau alcaline (70) selon la revendication 1, comprenant de plus un mécanisme configuré pour ajuster automatiquement l'ouverture de la vanne de régulation de pression (PV).

3. Système d'électrolyse d'eau alcaline (70) selon la revendication 1, dans lequel le dispositif de mesure de concentration de gaz (O₂I, H₂I) est disposé en parallèle avec la vanne de régulation de pression (PV), et la ligne pour le dispositif de mesure de concentration de gaz (O₂I, H₂I) est munie d'un mécanisme capable de réguler la pression et/ou le débit.

4. Système d'électrolyse d'eau alcaline (70) selon la revendication 1, dans lequel le dispositif de mesure de concentration de gaz (O₂I, H₂I) est disposé sur un côté amont de la vanne de régulation de pression (PV).

5. Système d'électrolyse d'eau alcaline (70) selon la revendication 1, dans lequel le dispositif de mesure de concentration de gaz (O₂I, H₂I) est disposé sur le côté aval de la vanne de régulation de pression (PV).

6. Système d'électrolyse d'eau alcaline (70) selon l'une quelconque des revendications 1 à 5 fonctionnant sous une alimentation en courant fluctuante.

7. Procédé de production d'hydrogène comprenant, la production d'hydrogène par électrolyse d'eau contenant un alcali en utilisant un système (70) incluant un électrolyseur (50), dans lequel :
le système (70) inclut une ligne de gaz d'hydrogène (100h) et une ligne de gaz d'oxygène (100o), chacune raccordée à l'électrolyseur (50) ;
la ligne de gaz d'hydrogène (100h) et la ligne de gaz d'oxygène (100ο) sont munies d'un dispositif de mesure de concentration de gaz (O₂I, H₂I), d'une gauge de pression (PI) et d'une vanne de régulation de pression (PV) ;
un compartiment d'électrode (5) est inclus dans l'électrolyseur (50) ;
un régulateur (91) configuré pour réguler le débit de circulation d'électrolyte selon la densité de courant appliquée au compartiment d'électrode (5) ; et
un tuyau de jonction (90) est raccordé à un récipient de séparation d'hydrogène (72h) configuré pour séparer l'électrolyte de gaz d'hydrogène et un récipient de séparation d'oxygène (72o) configuré pour séparer l'électrolyte de gaz d'oxygène ;
dans lequel la vanne de régulation de pression (PV) est régulée sur la base de données de pression de la gauge de pression (PI) de la ligne de gaz d'hydrogène (100h) et de la gauge de pression (PI) de la ligne de gaz d'oxygène (100ο) ; et
la différence de pression entre la ligne de gaz d'hydrogène (100h) et la ligne de gaz d'oxygène (100ο) est ajustée.

8. Procédé selon la revendication 7, comprenant de plus :
la régulation, en utilisant le système d'électrolyse d'eau alcaline (70) selon la revendication 1, du débit de circulation de l'électrolyte selon une densité de courant appliquée au compartiment d'électrode (5) ; et
le mélange de l'électrolyte déchargé du récipient de séparation d'hydrogène (72h) et de l'électrolyte déchargé du récipient de séparation d'oxygène (72o) par le tuyau de jonction (90) et l'introduction d'un mélange dans le compartiment d'électrode (5).

9. Système d'électrolyse d'eau alcaline (70) selon la revendication 1, comprenant de plus :
un compartiment de cathode (5) inclus dans un électrolyseur (50) ; et
un récipient d'hydrogène (81h) qui est raccordé au compartiment de cathode (5) par un tuyau d'introduction d'hydrogène (84h) sur un côté amont dans la direction de passage d'électrolyte et configuré pour stocker du gaz d'hydrogène à introduire dans le compartiment de cathode (5).

10. Procédé selon la revendication 7, comprenant de plus l'introduction de gaz d'hydrogène dans le compartiment de cathode (5) par le tuyau d'introduction d'hydrogène (84h) lorsque l'électrolyse est arrêtée, en utilisant le système d'électrolyse d'eau alcaline (70) selon la revendication 9.

11. Système d'électrolyse d'eau alcaline (70) selon la revendication 1, comprenant :
un électrolyseur (50) incluant un compartiment d'anode (5a) ; et
un récipient d'oxygène (81o) qui est raccordé au compartiment d'anode (5a) par un tuyau d'introduction d'oxygène (84o) sur le côté amont dans la direction de passage d'électrolyte et configuré pour stocker du gaz d'oxygène à introduire dans le compartiment d'anode (5a).

12. Procédé selon la revendication 7, comprenant de plus, lorsque l'électrolyse est arrêtée, l'introduction de gaz d'oxygène dans le compartiment d'anode (5a) par le tuyau d'introduction d'oxygène (84o), en utilisant le système d'électrolyse d'eau alcaline (70) selon la revendication 11.

13. Procédé selon la revendication 10 ou 12, dans lequel une alimentation en courant fluctuante est utilisée.
